(19)

Europäisches
Patentamt
European
Patent Office
Office européen
des brevets

(11) **EP 3 026 897 A1**

(12) **EUROPEAN PATENT APPLICATION**
published in accordance with Art. 153(4) EPC

(43) Date of publication:
**01.06.2016 Bulletin 2016/22**

(21) Application number: **14829979.5**

(22) Date of filing: **24.07.2014**

(51) Int Cl.:
*H04N 5/765* (2006.01)          *H04N 5/225* (2006.01)
*H04N 5/232* (2006.01)          *H04N 7/18* (2006.01)

(86) International application number:
**PCT/JP2014/069586**

(87) International publication number:
**WO 2015/012360 (29.01.2015 Gazette 2015/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.07.2013 JP 2013155458**

(71) Applicant: **Mitsubishi Electric Corporation Tokyo 100-8310 (JP)**

(72) Inventors:
• **YOSHIDA, Naoki**
  **Tokyo 100-8310 (JP)**

• **OKABE, Masaharu**
  **Tokyo 100-8310 (JP)**
• **TERAUCHI, Hironori**
  **Tokyo 100-8310 (JP)**
• **MOTEGI, Ichio**
  **Tokyo 100-8310 (JP)**

(74) Representative: **Sajda, Wolf E.**
  **Meissner, Bolte & Partner GbR**
  **Postfach 86 06 24**
  **81633 München (DE)**

(54) **SURVEILLANCE CAMERA, VIDEO SECURITY SYSTEM, AND SWIVEL-TYPE SURVEILLANCE CAMERA**

(57)      A storage (12) that stores yet-to-be-masked video data and performs authentication enabling the yet-to-be-masked video data to be accessed is disposed in a tilter (11) of a rotatable surveillance camera (1a). Further, a network recorder (5) that stores the masked data on which a masking process is performed by the rotatable surveillance camera (1a) is disposed. A communication channel for the yet-to-be-masked video data from the rotatable part (11) of the rotatable surveillance camera (1a) to the storage (12) is constructed separately from a communication channel for the masked data from a rotatable base (10) of the rotatable surveillance camera (1a) to the network recorder 5.

FIG.1

EP 3 026 897 A1

**Description**

FIELD OF THE INVENTION

The present invention relates to a video security system that implements an interconnection among cameras with rotation capability, network recorders, the Internet and security systems, which is incorporated into management systems for use in financial institutions (banks, brokerage companies, finance-related companies, ATMs), companies and the government and municipal offices, distribution systems, shopping districts, etc. Particularly, it relates to a video security system that performs privacy area masking of an area captured by an image of a video surveillance device in synchronization with the pan and tilt operations and the optical zoom operation of a camera with rotation capability or an indoor composite integrated camera.

BACKGROUND OF THE INVENTION

Typically, a surveillance camera device can perform pan and tilt rotations. In the surveillance camera that masks one or more privacy zones seen in images, plural pieces of mask data for masking corresponding to the privacy zones, together with numbers or names for managing the plural pieces of mask data, are stored, and the masking using the plural pieces of mask data is performed (for example, refer to patent reference 1).

RELATED ART DOCUMENT

PATENT REFERENCE

Patent reference 1: Japanese Unexamined Patent Application Publication JP 2001-069 494 A.

SUMMARY OF THE INVENTION

PROBLEMS TO BE SOLVED BY THE INVENTION

However, because the conventional surveillance camera device is configured in such a way as to be connected to a recorder device via an IP network, a video to be masked with the mask data (yet-to-be-masked video data before a masking process) can be easily accessed, and there is a possibility that stored secret information about individuals might be illegally leaked.

The present invention is made in order to solve the above-mentioned problem, and it is therefore an object of the present invention to provide a surveillance camera, a video security system and a surveillance camera with rotation capability which can prevent illegal access to yet-to-be-masked video data before a masking process.

MEANS FOR SOLVING THE PROBLEM

In accordance with the present invention, there is provided a surveillance camera that connectable to a video recorder and that performs a masking process on a mask area of an acquired video, the surveillance camera including: a storage for storing yet-to-be-masked video data before the masking process; and a transmitter for transmitting masked data after the masking process, to the video recorder.

ADVANTAGES OF THE INVENTION

Because the surveillance camera in accordance with the present invention stores in the storage the yet-to-be-masked video data before the masking process, illegal access to the yet-to-be-masked video data before the masking process can be prevented.

BRIEF DESCRIPTION OF THE FIGURES

FIG. 1    is a configuration diagram showing a video security system in accordance with Embodiment 1 of the present invention;

FIG. 2    is a block diagram of a surveillance camera of the video security system in accordance with Embodiment 1 of the present invention;

FIG. 3    is a block diagram of the internal configurations of FPGAs of the video security system in accordance with Embodiment 1 of the present invention;

FIG. 4    is a block diagram showing a circuit that generates CCD driving pulses of the video security system in accordance with Embodiment 1 of the present invention;

FIG. 5    is a block diagram showing an RTL circuit that generates CCD driving pulses (a V synchronization pulse, an SG (sensor gate) pulse, a SUB (electronic shutter) pulse) of the video security system in accordance with Embodiment 1 of the present invention;

FIG. 6    is a block diagram showing a circuit that implements FPGA peripheral devices (AFE, DSP, etc.) of the video security system in accordance with Embodiment 1 of the present invention;

FIG. 7    is a block diagram showing an RTL circuit that generates pulses (AFE synchronization pulses (PORCLK, POGCLK, POBCLK), reset gate pulses (XORGR, XORGG and XORGB), H1 pulses (XOH1R, XOH1G, XOH1B), H2 pulses (XOH2R, XOH2G, XOH2B) and POTDCK) of synchronization signal generating circuits of the video security system in accordance with Embodiment 1 of the present invention;

FIG. 8     is a block diagram showing an RTL circuit that generates pulses (horizontal synchronization, vertical synchronization and frame synchronization) of the synchronization signal generating circuits of the video security system in accordance with Embodiment 1 of the present invention;

FIG. 9     is an explanatory drawing showing a camera space (the area to be captured by images) of the video security system in accordance with Embodiment 1 of the present invention;

FIG. 10     is an explanatory drawing showing a privacy mask setting registration screen of the video security system in accordance with Embodiment 1 of the present invention;

FIG. 11     is an explanatory drawing showing an example of a method of calculating an amount of movement of a positional displacement (in a horizontal direction) between a mask setting position on the camera space and a current frame, in the video security system in accordance with Embodiment 1 of the present invention;

FIG. 12     is an explanatory drawing showing an example of a method of calculating an amount of movement of a positional displacement (in a vertical direction) between the mask setting position on the camera space and the current frame, in the video security system in accordance with Embodiment 1 of the present invention;

FIG. 13     is an explanatory drawing showing a method of masking a position where a mask setting position on the camera space overlaps the current frame, in the video security system in accordance with Embodiment 1 of the present invention;

FIG. 14     is a diagram showing pixels at each of which a mask registered position overlaps the current frame image, in the video security system in accordance with Embodiment 1 of the present invention;

FIG. 15     is a flow chart showing the whole of a masking process linked with rotation, of the video security system in accordance with Embodiment 1 of the present invention;

FIG. 16     is an explanatory drawing showing a relation, in the form of three-dimensional coordinates (polar coordinates), between the camera space and the optical axis center position of the current frame in an initial state (at the time of mask registration), in the video security system in accordance with Embodiment 1 of the present invention;

FIG. 17     is an explanatory drawing showing a relation (a transition to a first-order optical axis displacement state), in the form of three-dimensional coordinates (polar coordinates), between the camera space and the optical axis center position of the current frame after pan and tilt rotational operations and an optical zoom (electronic zoom) from the initial state, in the video security system in accordance with Embodiment 1 of the present invention;

FIG. 18     is an explanatory drawing showing a relation (a transition to a second-order optical axis displacement state), in the form of three-dimensional coordinates (polar coordinates), between the camera space and the optical axis center position of the current frame after pan and tilt rotational operations and an optical zoom (electronic zoom) from the state after the transition to the first-order optical axis displacement state, in the video security system in accordance with Embodiment 1 of the present invention;

FIG. 19     is an explanatory drawing, in an X-Z cross section, showing a relation between the current frame and a mask registered position in the camera space after pan and tilt rotations and an optical zoom (electronic zoom), in the video security system in accordance with Embodiment 1 of the present invention;

FIG. 20     is an explanatory drawing, in an X(Y)-Z cross section, showing a positional relationship in the camera space between the image formation surface of an image sensor and the position where the current frame is focused, before and after a tilt rotation, in the video security system in accordance with Embodiment 1 of the present invention;

FIG. 21     is an explanatory drawing, in an X(Y)-Z cross section, showing a positional relationship in the camera space between the image formation surface of the image sensor and the position where the current frame is focused, in the initial state (at the time of mask registration), in the video security system in accordance with Embodiment 1 of the present invention;

FIG. 22     is an explanatory drawing, in an X(Y)-Z cross section, showing a positional relationship in the camera space between the image formation surface of the image sensor and the position where the current frame is focused, before and after pan and tilt rotations and an optical zoom (electronic zoom) with respect to the initial state, in the video security system in accordance with Embodiment 1 of the present invention;

FIG. 23     is an explanatory drawing (first half) showing a correspondence between parameter setting variables of each rotatable camera state transition and positional variables of the camera, in the video security system in accordance with Embodiment 1 of the present in-

FIG. 24    is an explanatory drawing (second half) showing a correspondence between the parameter setting variables of each rotatable camera state transition and the positional variables of the camera, in the video security system in accordance with Embodiment 1 of the present invention;

FIG. 25    is a block diagram of a surveillance camera of a video security system in accordance with Embodiment 2 of the present invention;

FIG. 26    is an explanatory drawing showing a network packet reception data format of the video security systems in accordance with Embodiments 1 and 2 of the present invention;

FIG. 27    is a flow chart showing a process of transferring privacy masking data to a storage server in the video security system in accordance with Embodiment 2 of the present invention;

FIG. 28    is a schematic diagram showing a video security system in accordance with Embodiment 3 of the present invention;

FIG. 29    is a flow chart showing an operation of the video security system in accordance with Embodiment 3 of the present invention;

FIG. 30    is a schematic diagram showing a surveillance camera of a video security system in accordance with Embodiment 4 of the present invention;

FIG. 31    is an explanatory drawing showing provision of an encryption key of the surveillance camera of the video security system in accordance with Embodiment 4 of the present invention; and

FIG. 32    is a flow chart showing an operation of the video security system in accordance with Embodiment 4 of the present invention.

EMBODIMENTS OF THE INVENTION

Hereafter, in order to explain this invention in greater detail, the preferred embodiments of the present invention will be described with reference to the accompanying drawings.

Embodiment 1.

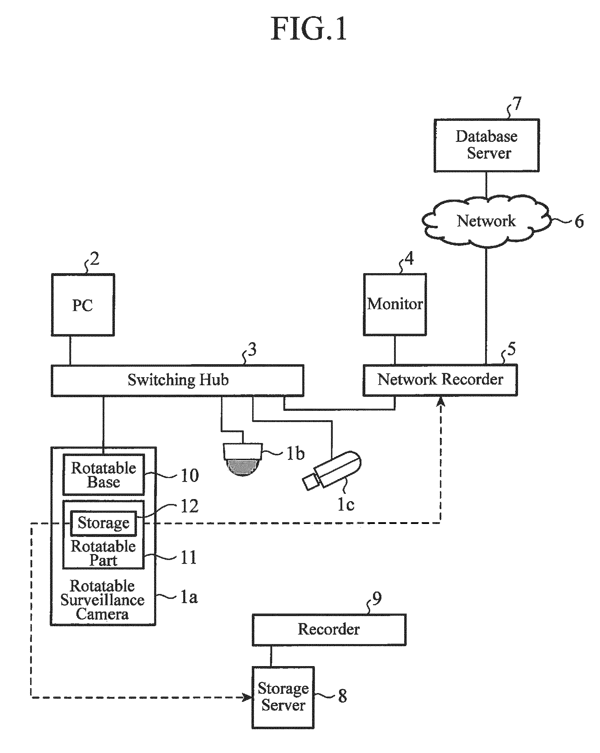

FIG. 1 is a configuration diagram showing a video security system in accordance with Embodiment 1 of the present invention.

The video security system shown in FIG. 1 includes a rotatable surveillance camera 1a, a dome surveillance camera 1b, a fixed surveillance camera 1c, a personal computer (PC) 2, a switching hub 3, a monitor 4, a network recorder 5, a network 6, a database server 7, a storage server 8 and a recorder 9.

The rotatable surveillance camera 1 a is a surveillance camera with rotation capability having a rotatable base 10 and a rotatable part 11, and includes a storage 12 in the rotatable part 11. The rotatable surveillance camera 1 a is a rotatable image capturing device that has maximum sensitivity for an optical wavelength range (light having a wavelength $\lambda$ greater than 360 [nm] and equal to or less than 830[nm]), and has an autofocusing mechanism, an optical zoom mechanism, an electronic zoom mechanism, a pan-tilt rotation operation mechanism and a wireless transmission mechanism between the rotatable part and the rotatable base, and that can transmit a

4K (4,096[pixels]×2,160[pixels], 60[fps], 10[bits] = 1,024 gradations to 16bits = 65,536 gradations) video.

The rotatable surveillance camera performs a dynamic masking process. The storage 12 is, for example, a storage medium, such as a micro SD card, that can be freely attached to and detached from the rotatable part 11, and stores, as privacy area data, a recorded video image of an area (= a privacy-preserving area) which is a target for masking. Each of the dome and fixed surveillance cameras 1b and 1c is an image capturing device that has maximum sensitivity for an optical wavelength range (light having a wavelength $\lambda$ greater than 360 [nm] and equal to or less than 830 [nm]), and that can transmit an SXVGA (1,280[pixels]×960[pixels]) video and a FULL HD (1,920[pixels]×1,080 [pixels]) video, and the dome and fixed surveillance cameras are a camera group that is mainly intended for a static masking process because each of them does not have a pan-tilt rotation operation mechanism.

The PC 2 is a device that performs device settings for a surveillance system, camera settings, recorder (playback and record) settings, etc., and is communication-connected, via the switching hub 3, to the rotatable and fixed surveillance cameras 1a to 1c and the network recorder 5. The monitor 4 is, for example, a liquid crystal display monitor that is connected to the network recorder 5 and displays videos received from the rotatable and fixed surveillance cameras 1a to 1c.

The network recorder 5 is a video recorder that records video data acquired by the rotatable and fixed surveillance cameras 1 a to 1 c together with information including a video delivery date and time, and is connected to the network 6. The network 6 is, for example, a LAN (local area network), and communication-connects between the network recorder 5 and the database server 7. The database server 7 keeps the recorded video data stored in the network recorder 5 in storage, to perform maintenance control on the recorded video data.

The storage server 8 and the recorder 9 are devices that are connected to the rotatable and fixed surveillance cameras 1 a to 1c and/or the PC 2 via a cable or a wireless link as needed, and are not connected to the network 6. The storage server 8 is a server that stores the privacy area data stored in the storage 12 therein, and the recorder 9 is a device that acquires the privacy area data stored in the storage server 8 for restoration.

These storage server 8 and recorder 9 are connected to the storage 12 and the PC 2 as needed, and transfer the privacy area data stored in the storage 12 to the storage server 8 to store the privacy area data in this storage server. As a result, even if the storage 12 is a small-capacity memory, by transferring the privacy data to the storage server 8 as appropriate, the privacy data can be prevented from overflowing from the storage 12.

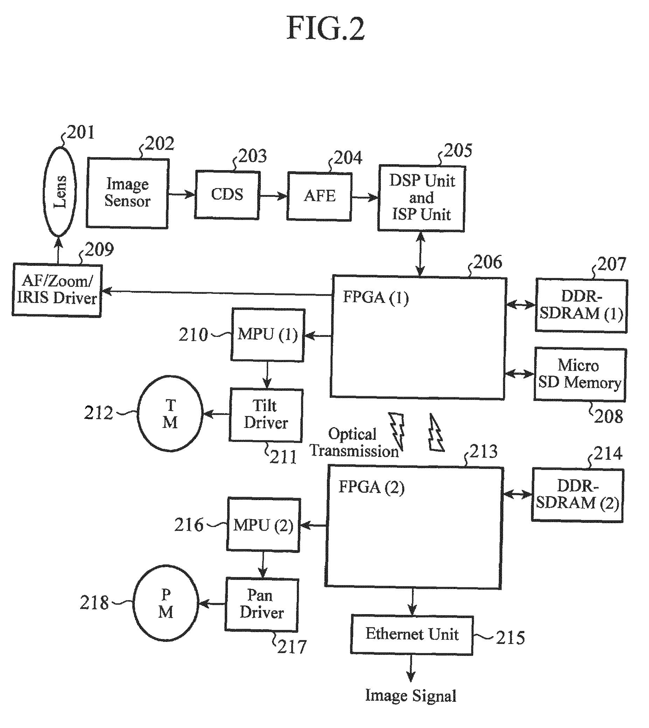

FIG. 2 is a functional block diagram of the rotatable surveillance camera 1a. Referring to FIG. 2, a lens 201 to a tilt motor (TM) 212 are components of the rotatable part 11, and an FPGA (Field Programmable Gate Array) (2) 213 to a pan motor (PM) 218 are components of the rotatable base 10.

The lens 201 has a function of imaging incident light onto an image sensor 202 such as a CCD (Coupled Charged Device) or a CMOS (Complementary Metal Oxide Semiconductor). A CDS (Correlated Double Sampling) 203 is an IC (integrated circuit) that performs correlated double sampling, and an AFE (Analog Front End) 204 is an IC (integrated circuit) that performs A/D conversion and gain control of a signal electric charge.

A DSP (Digital Signal Processor) unit and ISP (Image Signal Processor) unit 205 constitute a video signal processing unit that performs an image sampling process on a digital signal input thereto from the AFE 204, to perform digital formatting on a video.

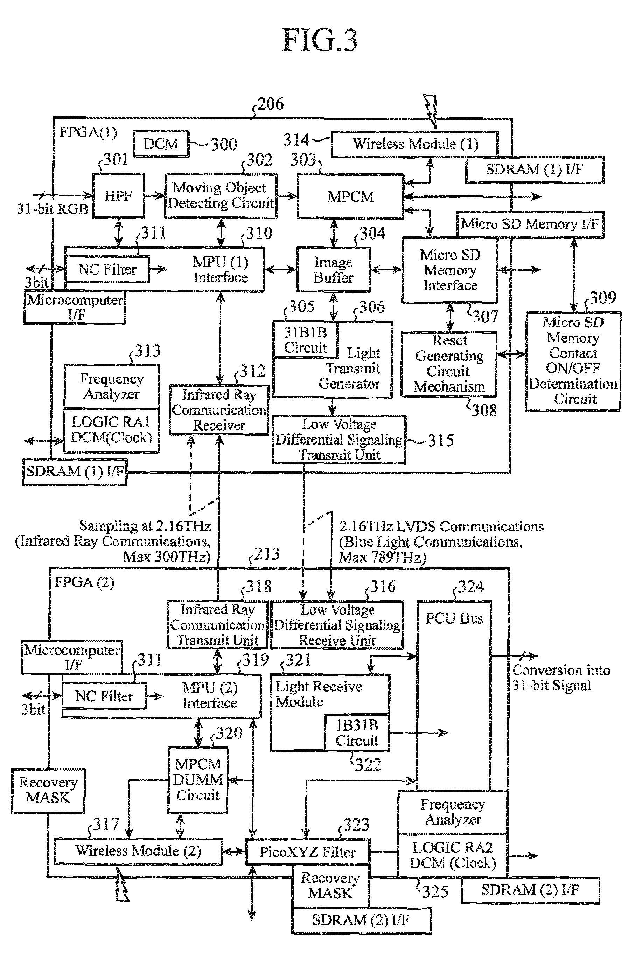

An FPGA (1) 206 is an IC (integrated circuit) having an edge detecting function, a motion detecting function, a mask coordinate position calculating function according to the dynamic masking process (MASK Signal process) in accordance with the present invention, a wireless communication function, a micro SD memory I/F, an LVDS communication function, an infrared ray communication function, an MPU (Micro Processor Unit), a serial interface function and a micro SD memory read and write control function. The details of the FPGA (1) will be explained by referring to an FPGA internal structure block diagram (transmission of a 4K (4,096×2,160) video) of FIG. 3.

A DDR-SDRAM (Double Data Rate Synchronous Dynamic Random-Access Memory (1) 207 is a memory that is used in order to successively hold, in a memory address space, pieces of information, such as a video signal, camera setting values and a camera mask registered position, which are transmitted into the FPGA (1) 206 at the time of signal processing including the dynamic masking process (a process of calculating an overlap portion between the coordinates of the current frame (at the time of being focused) and those of a past frame (mask registration) and fitting a masking position while feeding a tilt setting angle back to an MPU 1 serial I/F 310 (refer to FIG. 3)), an autofocusing process and a motion detecting process.

A micro SD memory 208 is a memory that constructs the storage 12 in FIG. 1 and can be freely attached to and detached from the rotatable part 11, and is configured in such a way as to be subjected to a process for prevention from an unauthorized use, such as encryption of the privacy area data recorded therein, when the micro SD memory is detached from the rotatable part 11.

An AF/Zoom/IRIS driver 209 is an auto-focusing/zoom/iris driver having a function of focusing a far end and a near end of a screen focus on the basis of a feedback control signal (an HPF frequency component calculation result, an optical magnification setting value and an electronic zoom setting value) from the FPGA (1) 206, and a function of adjusting TELE and WIDE of the angle of view to a state according to settings on the basis of a feedback control signal from the FPGA (1) 206.

An MPU (microprocessor unit) (1) 210 is a control processor to transmit an appropriate operation control signal to a tilt driver 211 according to camera settings (a masking position setting, a lens optical magnification setting, an electronic zoom magnification setting and a rotatable base angle setting) which are set on operation applications on the network recorder 5 and the PC 2. The tilt driver 211 has a function of transmitting a control signal to the tilt motor (TM) 212 according to the operation control signal from the MPU (1) 210, to cause the rotatable part to make a transition to a state at a predetermined tilt angle by using the tilt motor 212.

The FPGA (2) 213 disposed in the rotatable base 10 is an IC having an LVDS communication function for an LVDS transmission signal from the FPGA (1) 206, a mask coordinate position setting function according to the dynamic masking process in accordance with the present invention, an infrared ray communication function, and an interface function to an MPU (2) 216. The detailed configuration of the FPGA (2) will be explained by referring to FIG. 3.

A DDR-SDRAM (2) 214 is a memory that is used in order to successively hold, in a memory address space, pieces of information, such as a video signal, camera setting values and a camera mask registered position, which are transmitted into the FPGA (2) 213 both when the video signal (after mask correction), which is obtained by performing the masking process on the current frame (which is output to a PCU bus (refer to FIG. 3) at a time: t1), is transferred from the PCU bus to an Ethernet (registered trademark/this description will be omitted hereafter) unit 215, and when the dynamic masking process is performed and a process of feedback-transferring a future frame (which is output to the PCU bus at a time: t1') (t1<t1' or t1≈t1') to the FPGA (1) 206 is performed by using IrDA communications (a 2.1 [GHz] sampling frequency and a maximum sampling frequency of 300 [THz]). The Ethernet unit 215 is an interface to output the masked data from the FPGA (2) 213 as an image signal.

The MPU (2) 216 is a control processor to transmit an appropriate operation control signal to a pan driver 217 according to the camera settings (the masking position setting, the lens optical magnification setting, the electronic zoom magnification setting and the rotatable base angle setting) which are set on the operation applications on the network recorder 5 and the PC 2. The pan driver 217 has a function of transmitting a control signal to the pan motor (PM) 218 according to an operation control signal from the MPU (2) 216, to cause the rotatable base to make a transition to a state at a predetermined pan angle by using the pan motor 218.

FIG. 3 is a block diagram of the internal structures of the FPGAs for transmission of a 4K (4,096×2,160) video in Embodiment 1 of the present invention.

A digital clock manager (DCM) 300 is a circuit to perform external synchronization with a crystal oscillator to manage a frequency system within the FPGA with a high degree of precision. A high pass filter (HPF) 301 is a filter circuit to detect an edge of the video signal and to calculate and determine a high frequency peak component from spatial frequency components to perform an adjustment of an AF focus (to perform a masking signal measure at the focused positions of the far end and the near end). A moving object detecting circuit 302 is a circuit that performs detection of a moving object from the difference between the current frame and a past frame.

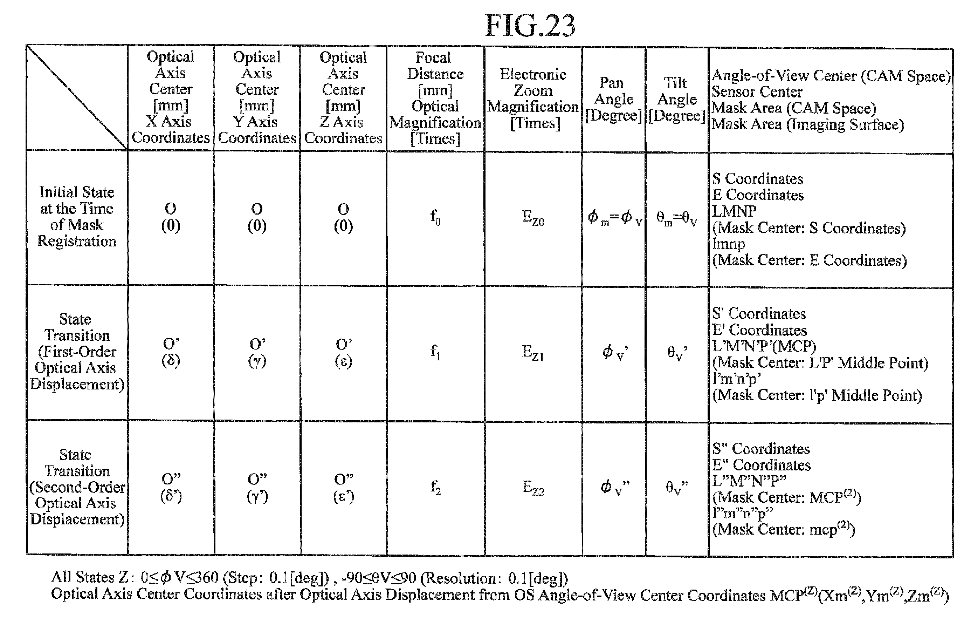

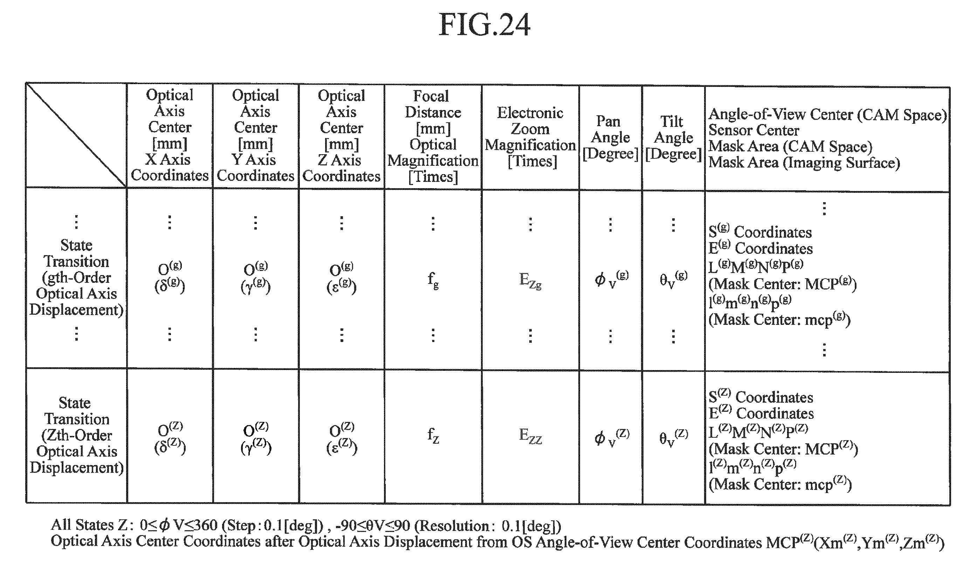

A mask signal processor (MPCM) 303 is a circuit that performs calculation of the coordinates of a portion where the coordinate position to be masked in the current frame overlaps the mask setting position coordinates of a frame at the time of mask registration, on the basis of a correspondence table between parameter setting variables of each rotatable camera state transition and positional variables of the camera (this correspondence table will be described below by using FIGS. 23 and 24), and performs video signal processing in such a way that a mask is applied to appropriate positions. The mask signal processor constructs a masking device.

An image buffer 304 is a buffer control unit to appropriately perform an image frame selection switching depending on an image frame (a frame with or without a mask in the course of the signal processing) at each timing, among the following three blocks: a light transmitting generator 306 for transmission to the FPGA (2) 213 of the rotatable base 10, a micro SD memory interface (I/F) 307 and an MPU (1) interface (I/F) 310, to transmit the image frame (a video signal with or without a mask) to each of the blocks at appropriate timing.

A 31B1B circuit 305 in the light transmit generator 306 is a circuit that performs parallel serial conversion within the light transmit generator 306, and a signal to be transferred to the FPGA (2) 213 is serial-converted into a signal having a predetermined serial transmission format and is then transferred to a low voltage differential signaling transmit unit 315. The low voltage differential signaling transmit unit 315 converts the signal into a signal compliant with the LVDS_25 signal standard, and performs transmission communications (the LVDS standard) from the FPGA (1) 206 to the FPGA (2) 213 at a frequency band (a band from 2.16[THz] to 138.1[THz]). In the case of 4K transmission (2,160p) and gradation (10bits), the communications are performed at 2.16 [THz] (H:4,096, V:2,160, 60 fps, 10-bit gradation (1,024 gradations)). In the case of 16 bits (65,536 gradations), the communications are performed at 2.16 [THz] to 138.1 [THz].

A micro SD memory interface 307 is a memory interface unit to perform read/write of a recorded video of the privacy-preserving area from and to the micro SD memory 208.

A reset generating circuit mechanism (Physical Reset) 308 is a circuit mechanism to perform appropriate authentication at the time of area opening and closing of the micro SD memory, to perform reset control of the micro SD memory 208 in such a way that data recorded on the memory can be read only when an open/close contact (physical contact) is open or closed to be released. This mechanism is an authentication type security mechanism to prevent data about the recorded video of the privacy-preserving area from illegally leaking to a third party, by using, for example, a means of being able to check individual privacy information, such as a credit card number or a bank account card number for use in ATMs, CDs, etc.

A micro SD memory contact ON/OFF determination circuit 309 is a contact determination circuit to notify the reset generating circuit mechanism 308 of an area opening and closing (ON, OFF) of the micro SD memory 208.

The MPU (1) interface 310 is an interface with the MPU (1) 210 in the FPGA (1) 206. A noise control (NC) filter 311 is a filter circuit to perform a noise removal with an FF multistage constitution for prevention of chattering noise occurring when communications between the FPGA (1) 206 and the MPU (1) 210 are performed.

An infrared ray communication receive unit (IrDA Receive) 312 is a receive unit that receives infrared light transmitted thereto from an infrared ray communication transmit unit (IrDA Transmit) 318 of the FPGA (2) 213.

A frequency analyzer 313 is an interface having an SDRAM1-I/F, to perform control in such a way that the frequency at which to transmit the contents of an internal generation signal buffer (the video signal, a synchronization signal and a register signal) indicates appropriate timing.

A wireless module (1) 314 is a one to achieve synchronization between the FPGA (1) 206 and the FPGA (2) 213 when feedback between the infrared ray communication receive unit 312 and the infrared ray communication transmit unit 318 is not performed, in cooperation with a wireless module (2) 317. More specifically, in communications between the infrared ray communication receive unit 312 and the infrared ray communication transmit unit 318, a comparison in each pixel bit data is performed among the following three types of data: the video data (privacy area data) in the privacy masking registration area, the video information data (masked data) to which the privacy area mask has been applied, and the raw frame data which is transmitted from the high pass filter 301 and/or the moving object detecting circuit 302 before the privacy area masking process is performed.

A feedback operation is then performed for checking in real time whether or not consistency in the masking position in frames among those data is achieved. The wireless module (1) 314 and the wireless module (2) 317 are disposed in order to, when communications between the infrared ray communication receive unit 312 and the infrared ray communication transmit unit 318 are not performed, perform both a process of establishing synchronization with an NTP server and the same real-time comparing process as that at the time of performing a comparison among the above-mentioned three types of data.

A low voltage differential signaling receive unit 316 in the FPGA (2) 213 is a receive unit that receives the LVDS_25 serial data transmitted thereto from the low voltage differential signaling transmit unit 315.

A light receive module 321 is a circuit to transmit the signal received via the low voltage differential signaling receive unit 316 onto the PCU (Parallel Control Unit) bus 324. A 1B31B circuit 322 is a circuit to perform serial parallel conversion of the signal within the light receive module 321. The 1B31B circuit 322 performs 31-bit parallel conversion of the signal, and transmits onto the PCU bus 324 the signal whose form is converted into a form compliant with the HDMI (High Definition Multimedia Interface/registered trademark) standard, the DVI (Digital Visual Interface) standard, the Gigabit Ethernet (1000BASE-T/TX, 2000 BASE-T) standard, or the like.

Its transmitter is configured with the FPGA (2) 213. The transmitter to transmit the masked data to the network recorder 5 is configured with the low voltage differential signaling receive unit 316, the light receive module 321, the PCU bus 324 in the FPGA (2) 213, the Ethernet unit 215 shown in FIG. 2, and other component.

The wireless module (2) 317 is a one that pairs up with the wireless module (1) 314, to achieve synchronization between the FPGA (1) 206 and the FPGA (2) 213 when feedback between the infrared ray communication receive unit 312 and the infrared ray communication transmit unit 318 is not performed.

An MPU (2) interface 319 is an interface with the MPU (2) 216 in the FPGA (2) 213, and includes a noise control filter 311, like the MPU (1) interface 310.

An MPCM/DUMM (Mask Position Calculating Module, Data Unread Mask Module) circuit 320 is a controller that calculates a correspondence table (refer to FIGS. 23 and 24) between the parameter setting variables of each rotatable camera state transition and the positional variables of the camera, and, based on the calculation result, performs calculation of the coordinates of a portion where the coordinate position to be masked in the current frame overlaps the mask setting position coordinates of a frame at the time of mask registration, to perform control in such a way that the image frame after mask correction is appropriately output from the PCU bus 324.

A PicoXYZ filter 323 is a circuit to determine the camera's optical axis displacement positions corresponding to the camera state transitions shown in FIGS. 23 and 24, and to correct the optical axis displacement positions of the rotatable camera to calculate the masking positions.

A frequency analyzer 325 is an interface having an SDRAM 2 I/F, to perform feedback synchronization of video timing with the FPGA (1) 206 and to perform control in such a way that the frequency at which to transmit the contents of an internal generation signal buffer indicates appropriate timing.

Next, a circuit configuration for implementing the dynamic masking process will be explained.

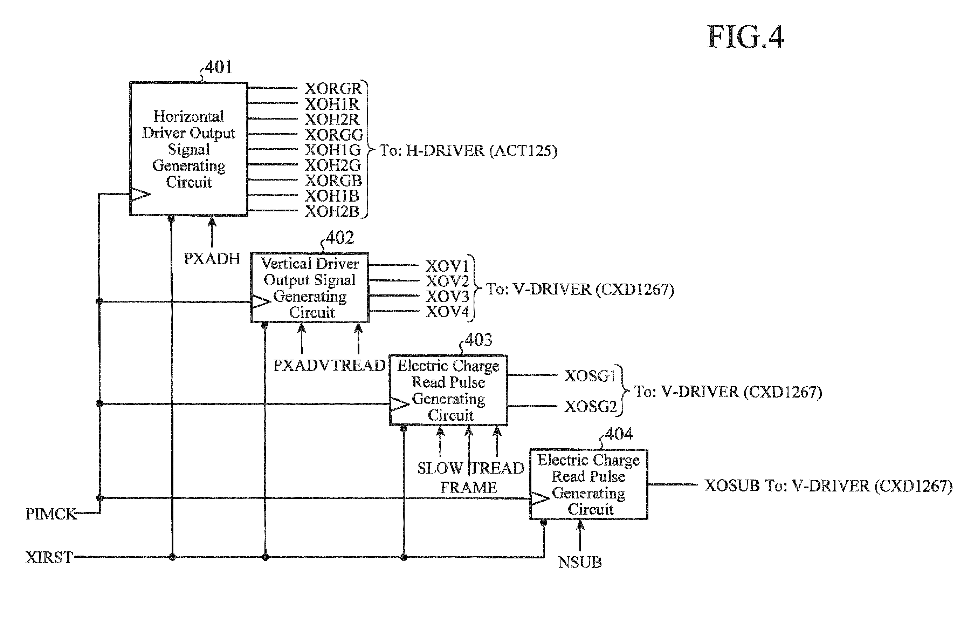

FIG. 4 is a schematic diagram of a circuit that generates CCD driving pulses.

A horizontal driver output signal generating circuit 401 illustrated in the figure (in FIG. 2, this generating circuit is configured in the MPU (2) 216 or the pan driver 217) is a circuit to supply reset gate pulses and horizontal driving pulses which are to be output to a horizontal synchronization driver (H driver) (in FIG. 2, the pan driver 217).

A vertical driver output signal generating circuit 402 (in FIG. 2, this generating circuit is configured in the MPU (1) 210 or the tilt driver 211), an electric charge read pulse generating circuit 403 (in FIG. 2, the FPGA (1) 206) and an electric charge discharging pulse generating circuit 404 (in FIG. 2, the FPGA (1) 206) are circuits to supply vertical driving pulses to a V driver (in FIG. 2, the tilt driver 211) and the image sensor (CCD/CMOS) (in FIG. 2, the image sensor 202).

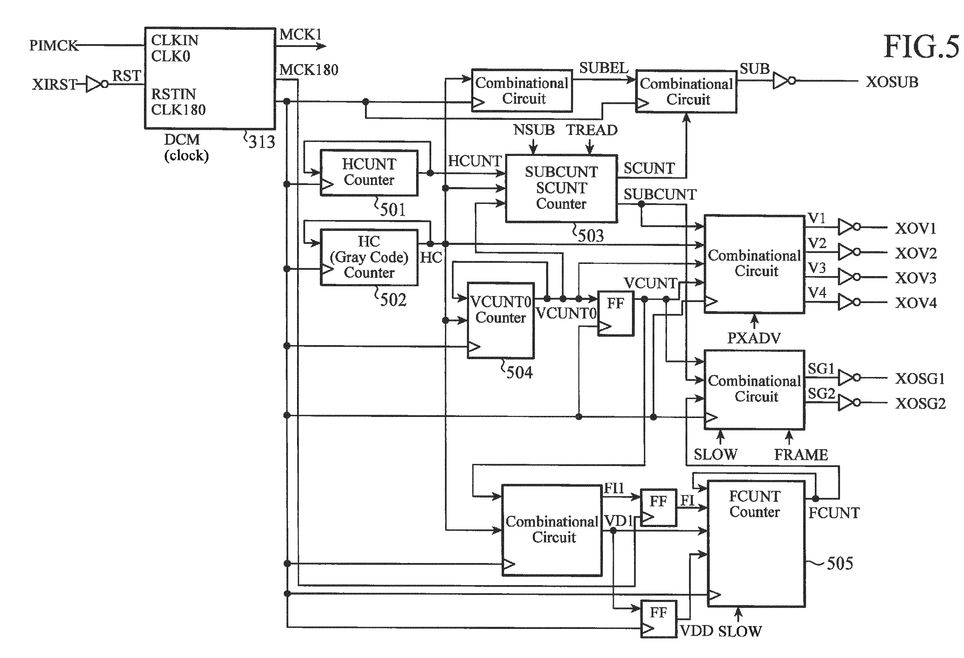

FIG. 5 shows a CCD driving pulse generation RTL circuit, and the CCD driving pulse generation RTL circuit is configured using an HCUNT counter circuit 501, an HC (Gray Code) counter circuit 502, a SUBCUNT SCUNT counter circuit 503, a VCUNTO counter circuit 504 and an FCUNT counter circuit 505.

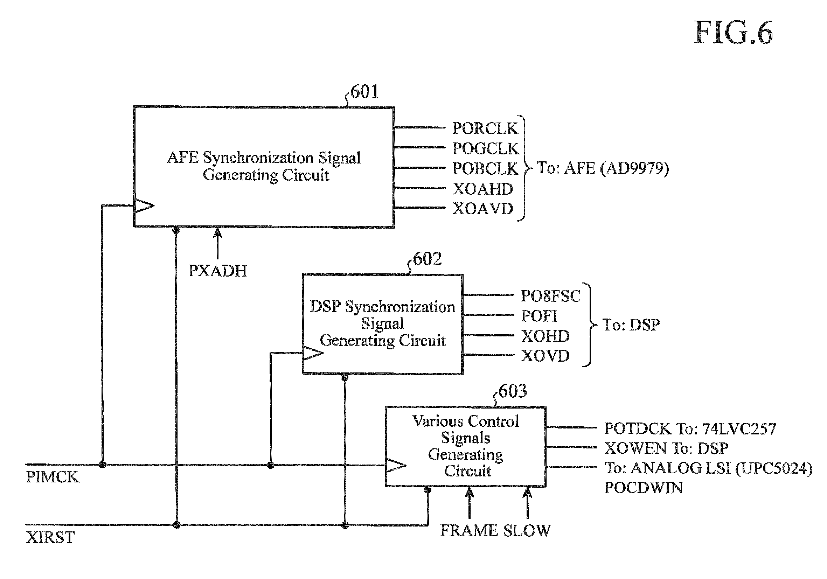

FIG. 6 is a schematic diagram of a circuit that generates signals to be supplied to FPGA peripheral devices (AFE, DSP, etc.).

An AFE synchronization signal generating circuit 601 (in FIG. 2, the FPGA (1) 206) shown in FIG. 6 is a circuit that supplies AFE clocks and horizontal (vertical) synchronization signals for AFE which are used for synchronization of the data signal from the AFE 204 (refer to FIG. 2) with the FPGA (1) 206. A DSP synchronization signal generating circuit 602 (in FIG. 2, the FPGA (1) 206) is a circuit that supplies horizontal, vertical and frame synchronization signals to the DSP unit and ISP unit 205. A various control signals circuit 603 (in FIG. 2, the FPGA (1) 206) is a circuit that generates analog IC and exposure (shutter) control signals.

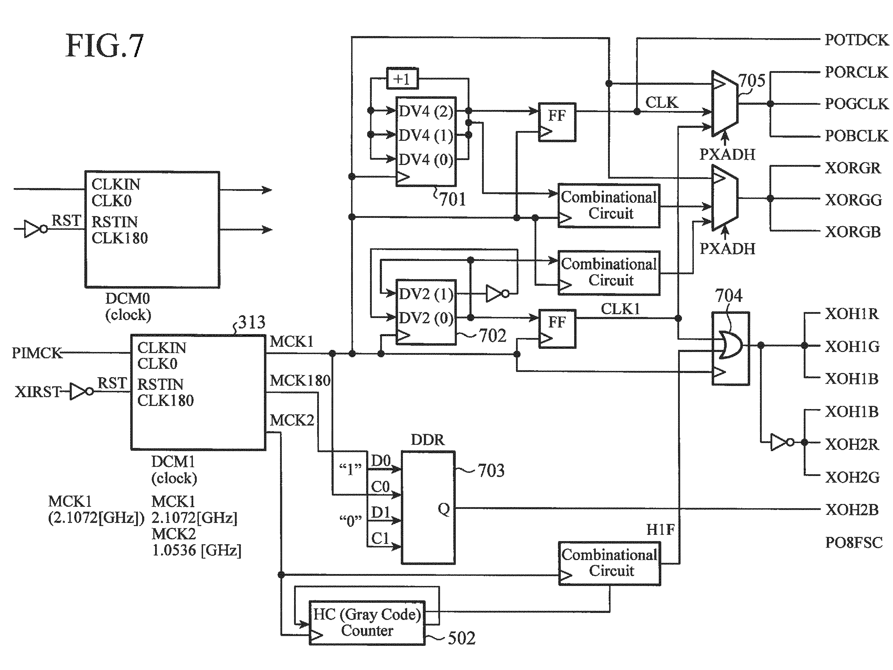

FIG. 7 shows a pulse generation RTL circuit that generates pulses (AFE synchronization pulses (PORCLK, POGCLK, POBCLK), and reset gate pulses (XORGR, XORGG, XORGB), H1 pulses (XOH1R, XOH1G, XOH1B), H2 pulses (XOH2R, XOH2G, XOH2B) and POTDCK) of the synchronization signal generating circuits.

As illustrated in the figure, the pulse generation RTL circuit is configured using a 1/4 frequency divided signal generating circuit 701, a 1/2 frequency divided signal generating circuit 702, a DDR (FPGA internal memory) unit 703, an OR gate 704 and a selector circuit 705.

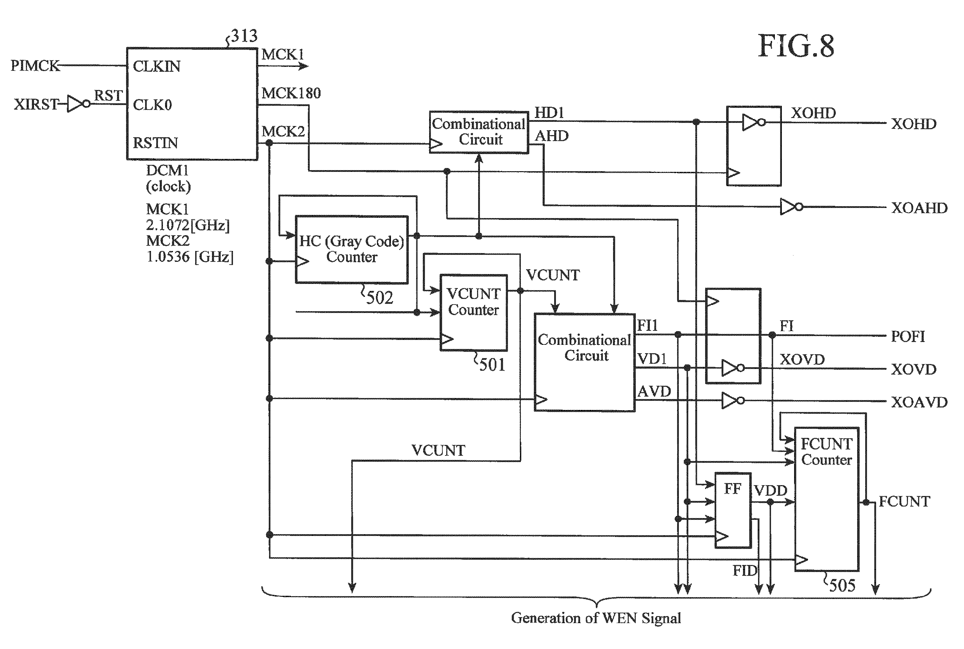

FIG. 8 shows a pulse generation RTL circuit that generates pulses (horizontal synchronization, vertical synchronization and frame synchronization pulses) of the synchronization signal generating circuits, and is configured using an HCUNT counter circuit 501, an HC (Gray Code) counter circuit 502 and an FCUNT counter circuit 505.

In the circuits shown in these FIGS. 4 to 8, in the inner counter of an FPGA that generates an output phase timing for each of the signal pulses supplied from the horizontal driver output signal generating circuit 401 to the FCUNT 505, and the AFE synchronization signal generating circuit 601 to the selector circuit 705, writing and reading of the video information in the privacy masking area and the video information outside the privacy masking area are performed and restrictions imposed on the operation control timing of the SDRAM memory interface are provided.

While systematic synchronization is achieved by achieving synchronization between the phase timing of each pulse and the counter for a masking memory process, and by achieving synchronization with an NTP server (synchronization between the FPGA (1) 206 and the FPGA (2) 213), control of writing and reading of (1) information about the masking position coordinates of each frame and (2) the delivery time information of each frame and network packet information in and from the memory address space is performed.

The components which need to be in exact timing with each other, in order to perform writing and reading of the video information in the privacy masking area and the video information outside the privacy masking area on a per frame basis, are the synchronous counters within the following modules: the FPGA (1) 206, the FPGA (2) 213, the image sensor 202, the AFE 204, the DSP unit and ISP unit 205, the DDR-SDRAM (1) 207 and the micro SD memory 208.

Next, the dynamic masking process in accordance with Embodiment 1 will be explained.

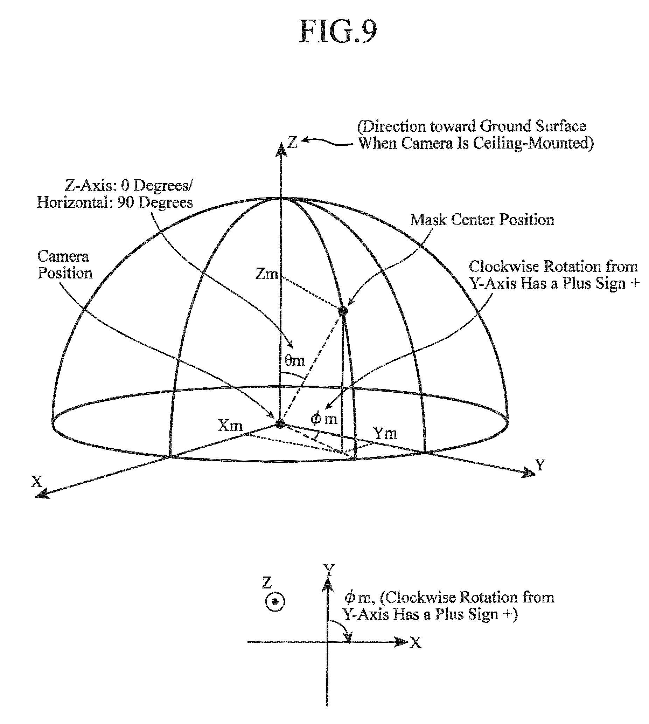

FIG. 9 is an explanatory drawing showing a relation between a mask center position and a 360-degree space (the area to be captured by images) with the rotatable surveillance camera 1a in accordance with Embodiment 1 being centered therein. It is assumed that, the rotatable surveillance camera 1 a can capture an image in xyz directions, as shown in the figure. Hereafter, this 360-degree space is referred to as a camera space.

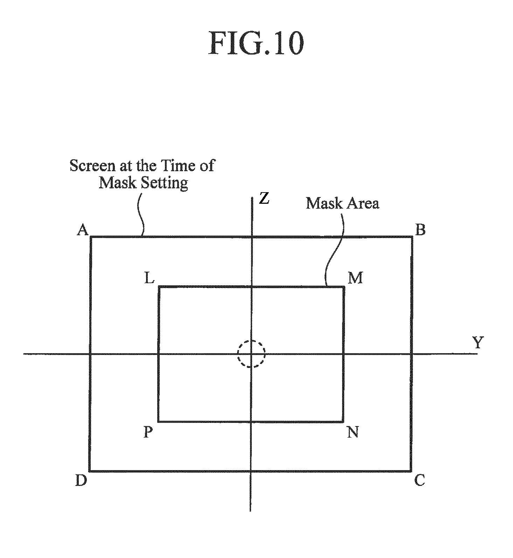

FIG. 10 is an explanatory drawing showing a privacy mask setting registration screen.

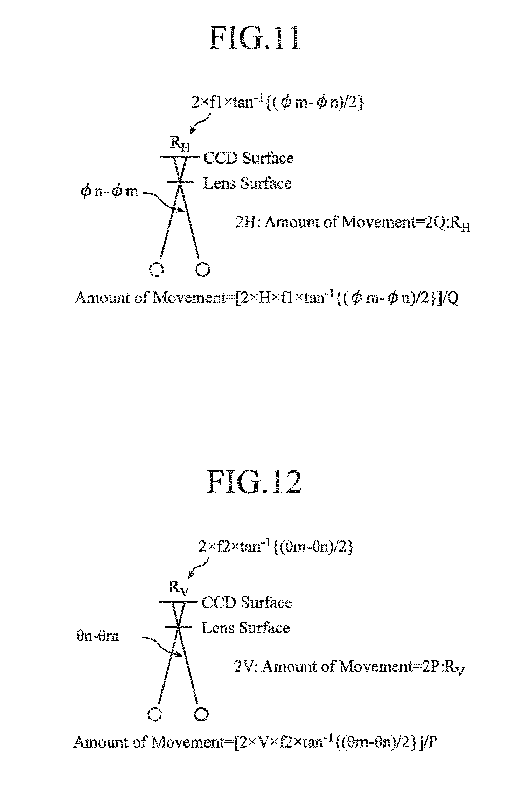

FIG. 11 is an explanatory drawing in the case of calculating the amount of movement (in a horizontal direction) of the positional displacement between a mask setting position on the camera space, and the current frame, and FIG. 12 is an explanatory drawing in the case of calculating the amount of movement (in a vertical direction) of the positional displacement between the mask setting position on the camera space, and the current frame.

In FIG. 10, a rectangle ABCD shows a screen at the time of a mask setting, and a rectangle LMNP shows a mask area. Further, the screen at the time of a mask setting has the same center coordinates as the mask area, and the size of the mask area is specified by using a scale to the screen.

Various parameters at the time of mask setting registration are provided as follows.

The size of the image sensor 202 (CCD): the longitudinal size $2P_0$ [mm], the lateral size $2Q_0$ [mm]

The angle of view area at the masking position (focused position) :

$$\text{the longitudinal size } 2V_0 \ (= 2 \times R_0 \cdot P_0 / f_0)$$

$$\text{the lateral size } 2H_0 \ (= 2 \times R_0 \cdot Q_0 / f_0)$$

The focal distance $f_0$ [mm].

The direction of the rotatable base: $\theta m$ (deg) in the vertical, $\phi m$ (deg) in the horizontal.

The center coordinates of the mask $S(X_m, Y_m, Z_m)$.

The size of the mask: longitudinal width $2\alpha$, lateral width $2\beta$.

The distance to the target to be masked $R_0$.

FIGS. 11 and 12 explain a method of calculating coordinate information about the registered mask according to the state of the rotatable camera (the optical axis center, the optical magnification, the electronic zoom magnification, the pan angle and the tilt angle). In these diagrams, $R_H$ and $R_V$ show the amounts of movement of the coordinates on the CCD imaging surface at the time of a movement of the target to be masked (the amount of pan movement: $-\phi n$, the amount of tilt movement: $-On$).

(The amount of movement in a pan direction: $2 \times f1 \times \tan^{-1}\{(\phi m - \phi n)/2\}$)
(The amount of movement in a tilt direction: $2 \times f2 \times \tan^{-1}\{(\theta m - \theta n)/2\}$)

It is assumed that the $\pm$ signs of the amounts of the pan and tilt movement depend on the direction of the coordinates at the time of mask registration.

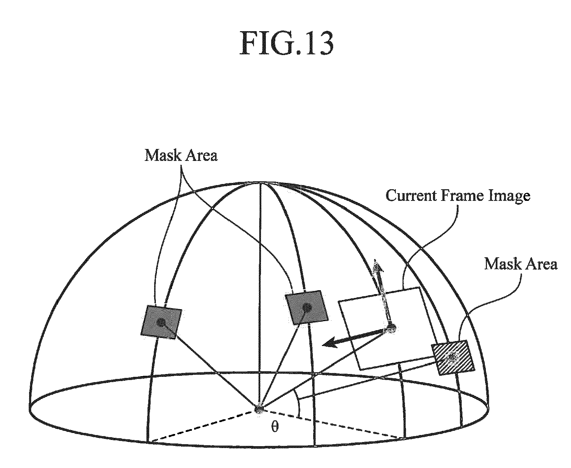

FIG. 13 is an explanatory drawing showing a method of masking a position where a mask setting position on the camera space overlaps the current frame.

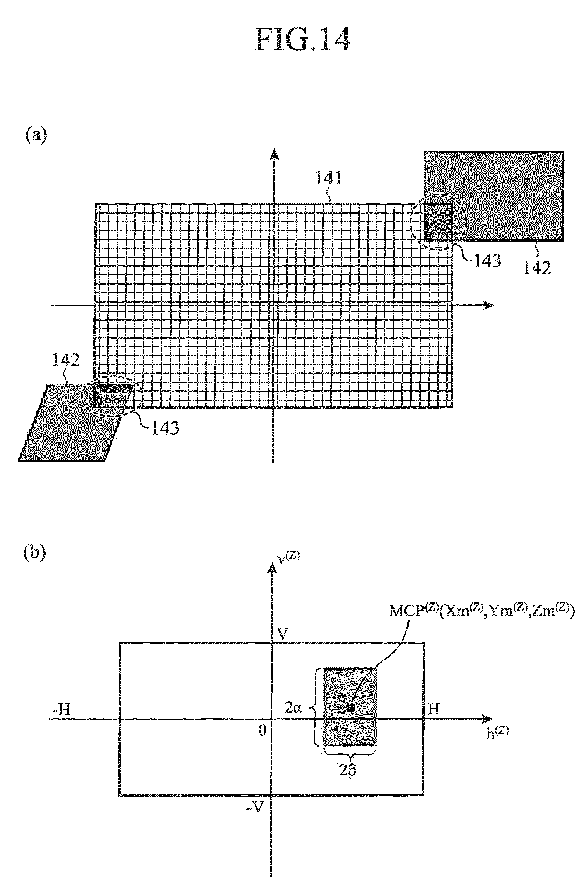

Further, FIG. 14 is a diagram showing pixels at which the current frame image overlaps a mask registered position. In FIG. 14, FIG. 14(a) shows an image of privacy masking registration setting positions and the current frame when the angle of view is made to vary to a position intermediate between two mask areas in the camera space of FIG. 13. In the figure, each overlap portion (each portion enclosed by a broken line) 143 in which the current frame image 141 overlaps a mask area 142 is pixels in an area to be masked. Further, FIG. 14(b) shows a frame state after a PTZ operation of the dynamic masking process, and shows optical axis center coordinates MCP in FIGS. 23 and 24 which will be described below. Further, (b) shows a certain state transition on the camera space of FIG. 13, and the optical axis center O of the current frame exists in a left-hand side of the masking setting area in a Zth-order optical displacement.

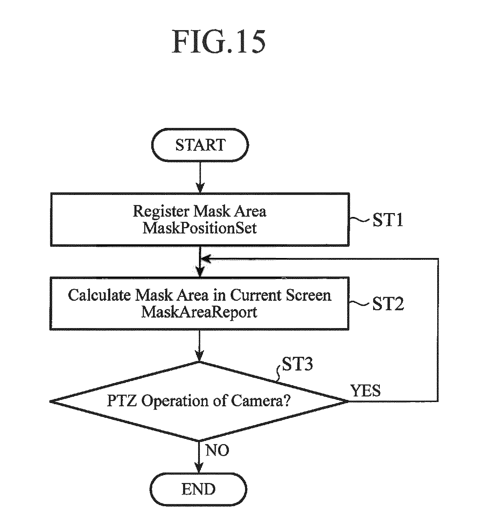

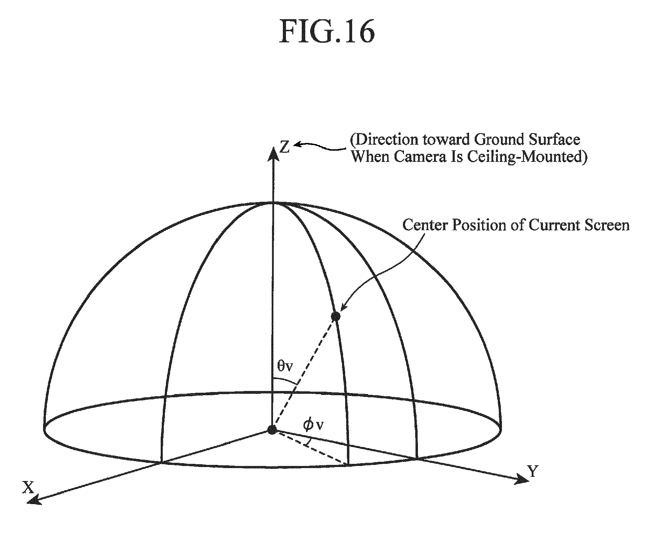

An entire process flow of a dynamic masking process algorithm is implemented by repeatedly performing processes shown in steps ST1 to ST3 of FIG. 15. More specifically, a mask area is registered (step ST1), and the mask area in the current screen is calculated (step ST2). When a PTZ operation and/or a zoom (optical and/or electronic) operation are performed (step ST3), the state makes a transition, as shown in FIGS. 16 to 18.

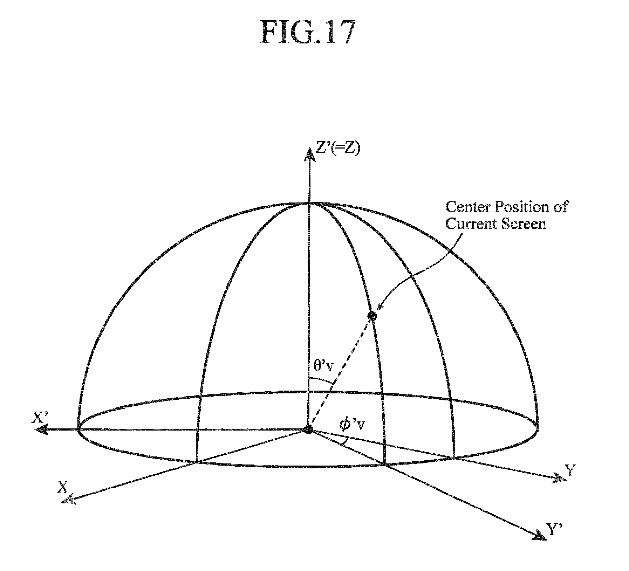

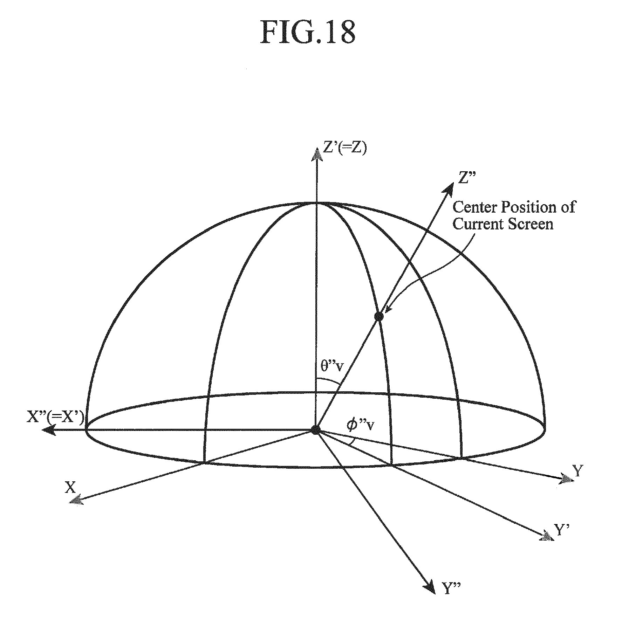

More specifically, the camera state makes transitions, starting from a relation (three-dimensional coordinates (in a polar coordinate form)) between the camera space and the optical axis center position of the current frame in an initial state (at the time of mask registration) as shown in FIG. 16, leading from the initial state to a relation (first-order optical axis displacement state transition) (three-dimensional coordinates (in a polar coordinate form)) between the camera space and the optical axis center position of the current frame after a PTZ rotational operation as shown in FIG. 17, then leading (from the first-order optical axis displacement state transition) to a relation (second-order optical axis displacement state transition) (three-dimensional coordinates (in a polar coordinate form)) between the camera space and the optical axis center position of the current frame after a PTZ rotational operation as shown in FIG. 18, and further leading to ....

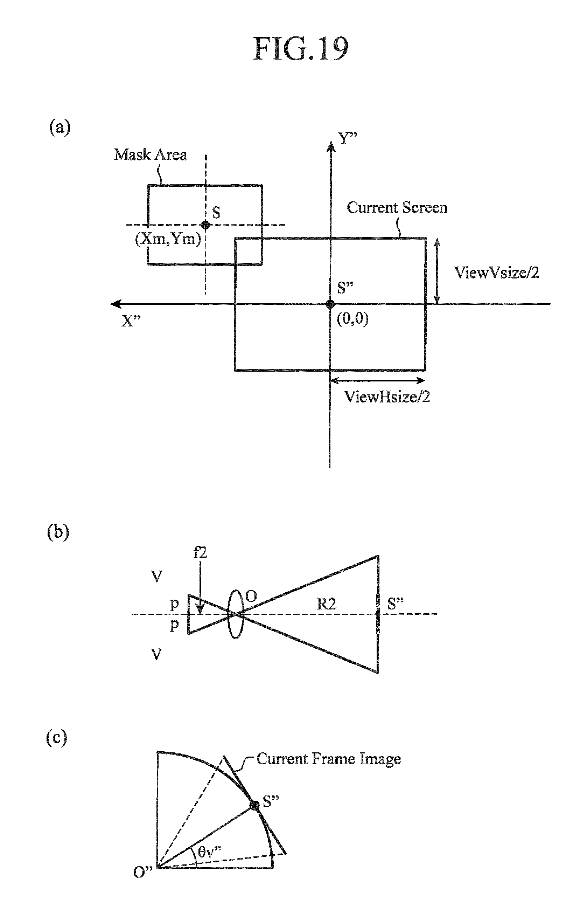

FIG. 19 is an explanatory drawing, using an X-Z cross section, showing a relation between the current frame and a mask registered position in the camera space after pan and tilt rotations and optical zoom (electronic zoom).

In the figure, FIG. 19(a) shows a correspondence on the camera space between a mask area at the time of mask registration (the coordinates $S(X_m, Y_m, Z_m)$ of the central point of the mask) and the current frame image (the screen center is S"(0, 0, 0)), and the masking process is performed starting from the coordinates of an area (upper left portion) where there is an overlap between the space coordinates of the mask area and the space coordinates of the current frame.

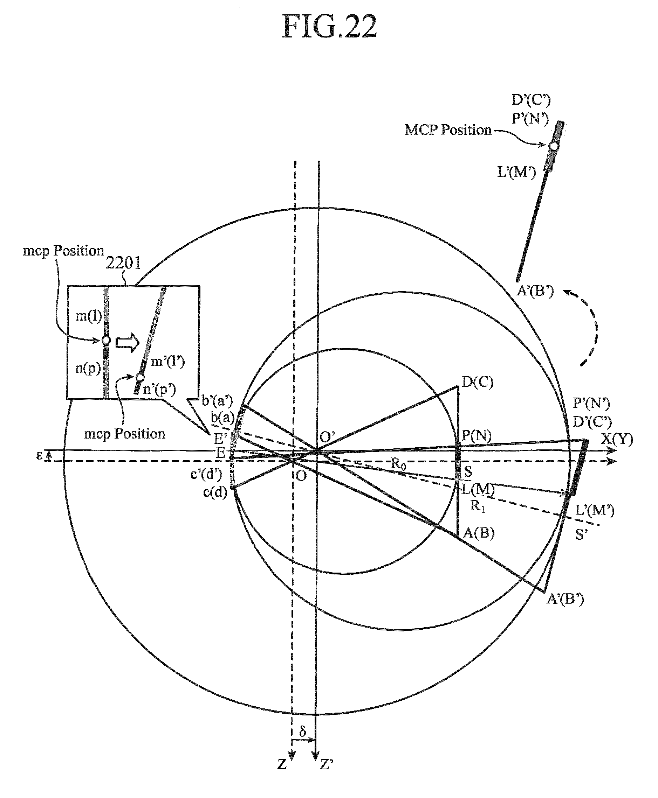

Further, FIG. 19(b) in the figure is an explanatory drawing showing a positional relationship of the camera system. In FIG. 19(b), p denotes the size in a longitudinal direction of the CCD, f2 denotes the focal distance at the time of a second-order transition state (a transition state immediately after a transition state of FIG. 22 which will be described below), and R2 denotes the distance from the lens to an object to be image-captured in a case in which focal matching is established at the optical axis center at the time of the second-order transition state. Further, FIG. 19(c) in the figure is a cross-sectional view of the camera space.

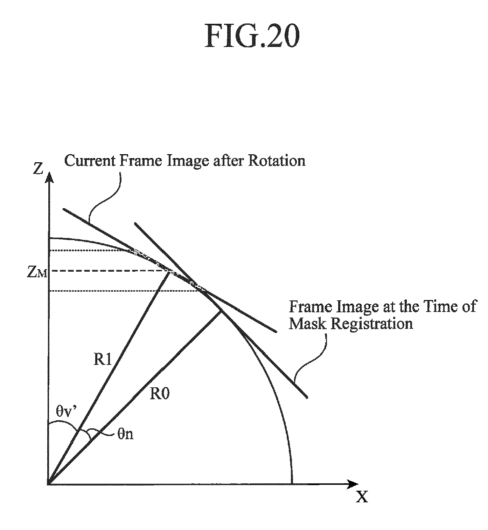

FIG. 20 is an explanatory drawing, using an X(Y)-Z cross section, showing a positional relationship in the camera space between the image formation surface of the image sensor and the position where the current frame is focused, before and after a tilt rotation. In the figure, $\theta v'+\theta n = \theta v$ is established. Further, it is assumed that the Z-axis corresponds to 0 degrees and a horizontal direction corresponds to 90 degrees.

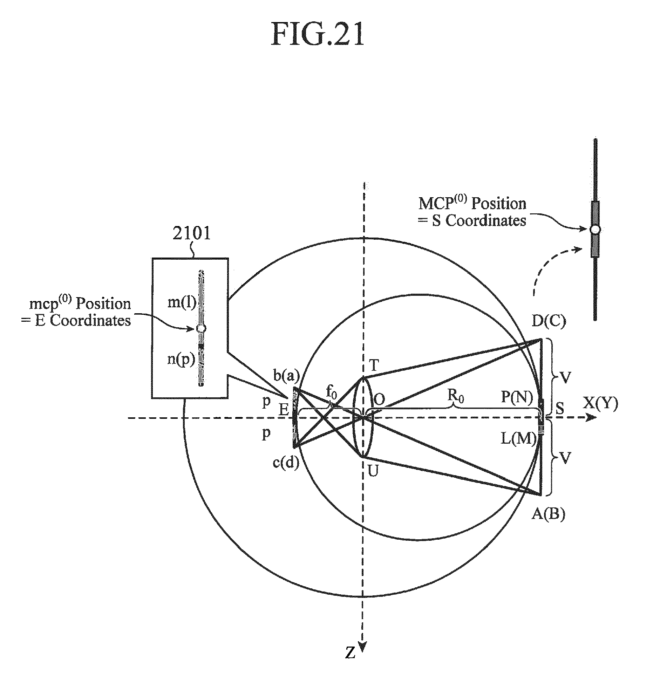

FIG. 21 is an explanatory drawing, using an X(Y)-Z cross section, showing a positional relationship in the camera space between the image formation surface of the image sensor and the position where the current frame is focused, in the initial state (at the time of mask registration), and a balloon 2101 shows an enlarged view of the imaging surface.

Further, FIG. 22 is an explanatory drawing, using an X(Y)-Z cross section, showing a positional relationship in the camera space between the image formation surface of the image sensor and the position where the current frame is focused, before and after pan and tilt rotations and optical zoom (electronic zoom) performed after the initial state, and a balloon 2201 shows an enlarged view of the imaging surface.

Three-dimensional coordinates on the camera space are as follows.

O coordinates (0, 0, 0),

S coordinates $(R_0 Sin\theta v Sin\phi v, R_0 Sin\theta v Cos\phi v, R_0 Cos\theta v)$

A(B) coordinates $(R_0 Sin\theta v Sin\phi v, R_0 Sin\theta v Cos\phi v \pm R \cdot Q_0/f_0, R_0 Cos\theta v + R_0 \cdot P_0/f_0)$

D(C) coordinates $(R_0 Sin\theta v Sin\phi v, R_0 Sin\theta v Cos\phi v \pm R_0 \cdot Q_0/f_0, R_0 Cos\theta v - R_0 \cdot P_0/f_0)$

E coordinates $(-f_0 Sin\theta v Sin\phi v, -f_0 Sin\theta v Cos\phi v, -f_0 Cos\theta v)$

a(b) coordinates $(-f_0 Sin\theta v Sin\phi v, -f_0 Sin\theta v Cos\phi v \pm Q_0, -f_0 Cos\theta v - P_0)$

d(c) coordinates $(-f_0 Sin\theta v Sin\phi v, -f_0 Sin\theta v Cos\phi v \pm Q_0, -f_0 Cos\theta v + P_0)$

-90 [°] $\leq \theta v \leq$ 90 [°] (in steps of 0.1 degrees) 0 [°] $\leq \theta v \leq$ 360 [°] (in steps of 0.1 degrees)

For the coordinate positions S', E', a'(b') and c'(d'), and subsequent coordinate positions, sequential calculations are performed repeatedly by a combination of the method, shown in FIG. 11, of calculating the amount of movement (in a horizontal direction) of the positional displacement between a mask setting position and the current frame, and the method, shown in FIG. 12, of calculating the amount of movement (in a vertical direction) of the positional displacement between a mask setting position and the current frame. The results of the calculations are stored in the memory address spaces of the DDR-SDRAM (1) 207, the DDR-SDRAM (2) 214 and the micro SD memory 208.

The following conditions are satisfied: $\theta v = \theta m$

and $\phi v = \phi m$. The optical axis displacement values of the O' coordinates ($\delta$, $\gamma$, $\varepsilon$), the O" coordinates ($\delta$', $\gamma$', $\varepsilon$'), ..., the O(g) coordinates ($\delta$(g), $\gamma$(g), $\varepsilon$(g)) depend on the lens specifications.

FIGS. 23 and 24 are explanatory drawings of a registered mask table showing all transition states of the rotatable camera.

The seven columns (the optical axis center X axis coordinates to the tilt angle) starting from the leftmost one in these figures show each state of the rotatable camera.

The rightmost single column (the angle-of-view center, ...) in the figures shows the coordinate information about the registered mask corresponding to each state of the rotatable camera. In the figures, the S coordinates show the center coordinates of the mask according to the state of the rotatable camera described in the corresponding left columns, the E coordinates show the center coordinates of the image sensor such as a CCD or a CMOS, according to the state of the rotatable camera described in the corresponding left columns, LMNP shows the coordinates of a vertex of the rectangle, on the camera space, enclosing the inside of the registered privacy mask area, and lmnp shows the coordinates of the image formation point in the image sensor where the coordinates correspond to the coordinates of the vertex of the rectangle, on the camera space, enclosing the inside of the registered privacy mask area.

In accordance with this embodiment, the coordinate information of each registered mask is converted into coordinate information according to the state of the rotatable camera (the optical axis center, the optical magnification, the electronic zoom magnification, the pan angle and the tilt angle) in the above-mentioned way. Then, the state of the rotatable camera and the coordinate information according to the state of the rotatable camera (refer to FIGS. 23 and 24) are stored in the DDR-SDRAM (1) 207, the DDR-SDRAM (2) 214, and the micro SD memory 208.

By performing the dynamic masking process as described above, it becomes unnecessary to process the positional relationship of each mask with the current frame image whenever the camera rotates, as occasion demands. A reduction in the processing load at the time when the camera rotates can be made and real time nature can be secured. A masking process adaptable to high-speed rotations of the camera can be implemented. A reliable masking process can be implemented.

Next, a stored state of the video data in Embodiment 1 will be explained.

After light incident upon the rotatable surveillance camera 1 a is imaged onto the image sensor 202 via the lens 201 shown in FIG. 2, and predetermined image processing is performed on an image by the DSP unit and ISP unit 205 and other component, the image is input to the FPGA (1) 206. In the FPGA (1) 206, the masking process is performed by the mask signal processor 303 (refer to FIG. 3) and other component.

On the other hand, in the FPGA (1) 206, the recorded video image (privacy area data) in the mask area is stored in the micro SD memory 208 via the micro SD memory interface 307. In this case, the data to be stored are stored while they are associated with detailed information at the time of image capturing (the information about the masking position coordinates of each frame, the delivery time of data from an NTP server, etc.).

Next, a case in which the micro SD memory 208 in which the privacy area data are stored is detached will be explained.

When the micro SD memory 208 is inserted, the micro SD memory contact ON/OFF determination circuit 309 determines that the micro SD contact is ON. As a concrete example of the contact, there is a lid for a slot for storing the micro SD memory 208, and the micro SD memory contact ON/OFF determination circuit determines that the contact is ON when this lid is closed.

When the micro SD memory 208 is ejected, the micro SD memory contact ON/OFF determination circuit 309 determines that the micro SD contact is OFF. For example, when the lid is open, the micro SD memory contact ON/OFF determination circuit determines that the contact is OFF. The micro SD memory interface 307 and the reset generating circuit mechanism 308 are notified of the determination result.

The reset generating circuit mechanism 308 determines whether or not appropriate authentication has been performed before the micro SD memory 208 is ejected or at the same time when the micro SD memory 208 is ejected. More specifically, the reset generating circuit mechanism determines whether or not appropriate authentication has been performed when a notification showing "micro SD contact is OFF" from the micro SD memory contact ON/OFF determination circuit 309 is received or before the notification is received. As a concrete example of this authentication, a typical authentication procedure, such as a password input or fingerprint authentication, can be applied.

When appropriate authentication has been performed, the setting for the micro SD memory 208 is performed to enable reading from the micro SD memory 208. In contrast, when appropriate authentication has not been performed, the setting for the micro SD memory 208 is performed to disable reading from the micro SD memory 208.

Further, the micro SD memory 208 which is detached from the rotatable part 11 is kept in storage by using a means, such as a key-operated locker or a safe, which a system administrator can manage.

Further, the masked data obtained by the mask signal processor 303 of the FPGA (1) 206 and other components which perform the above-mentioned masking process is transmitted via light from the FPGA (1) 206 of the rotatable part 11 to the FPGA (2) 213 of the rotatable base 10, further stored in the network recorder 5 via the FPGA (2) 213 and registered in the database server 7 as needed. In this case, also in the rotatable surveillance camera 1 a, because the transmission method is used such that the communications between the rotatable base 10 and the rotatable part 11 cannot be accessed directly from the communications between the rotatable base 10 and the network recorder 5, from this point of view, illegal access to the storage 12 can be prevented.

As previously explained, because the surveillance camera of Embodiment 1 can be connected to a video recorder and performs a masking process on a mask area of an acquired video, which includes a storage for storing yet-to-be-masked video data before the masking process, and a transmitter for transmitting to the video recorder masked data after the masking process, illegal access to the yet-to-be-masked video data before the masking process can be prevented.

Further, because the storage in the surveillance camera of Embodiment 1 performs authentication that enables the yet-to-be-masked video data to be accessed, illegal leakage of personal information can be prevented.

In addition, because the storage in the surveillance camera of Embodiment 1 is a recording medium that can be attached and detached freely, the convenience for those who manage the system and other persons can be improved while there is provided an advantage of preventing illegal leakage of personal information.

Further, because the surveillance camera of Embodiment 1 is a camera with rotation capability having a rotatable base and a rotatable part which are disposed separately, and the storage is disposed in the rotatable part and a communication channel with the video recorder is connected to the rotatable base, the security in the case of using the camera with rotation capability can be further improved.

In addition, because the mask area in the surveillance camera of Embodiment 1 is comprised of a preset area, the masking process can be performed at a high speed.

Further, because the video security system of Embodiment 1 performs a masking process on a mask area of the video acquired by the surveillance camera, which includes a storage for storing yet-to-be-masked video data before the masking process, and a transmitter for transmitting to the video recorder masked data after the masking process, illegal access to the yet-to-be-masked video data before the masking process can be prevented.

Further, because the video security system of Embodiment 1 includes a storage server for transferring and storing the yet-to-be-masked video data stored in the storage, and the storage server performs the transfer by using a communication channel that is separated from a communication channel from the surveillance camera to the video recorder, an overflow of the yet-to-be-masked video data from the storage can be prevented and illegal access to the stored data including the yet-to-be-masked video data in the storage server can also be prevented.

Further, because the rotatable surveillance camera described in Embodiment 1 has a rotatable base and a rotatable part and performs masking on a privacy-preserving area which is a target in a video acquired by the rotatable part, which includes a registered mask table in which a registered mask for performing the masking is converted into coordinate information corresponding to the rotation state of the rotatable part, and a masking device that acquires the coordinate information from the registered mask table according to the rotation state of the rotatable part to perform a masking process with the coordinate information, the masking process can be performed with reliability.

Further, by using the rotatable camera, a video security system can be implemented, performing the dynamic masking that enables reduction of errors in the dynamic masking position accuracy due to a distortion, a rotation and a rotational operation, and also reduction of errors in the focus to a moving object (target to be monitored).

Embodiment 2.

Embodiment 2 is an example in which a privacy area data acquirer that acquires privacy area data from a storage for restoration is provided.

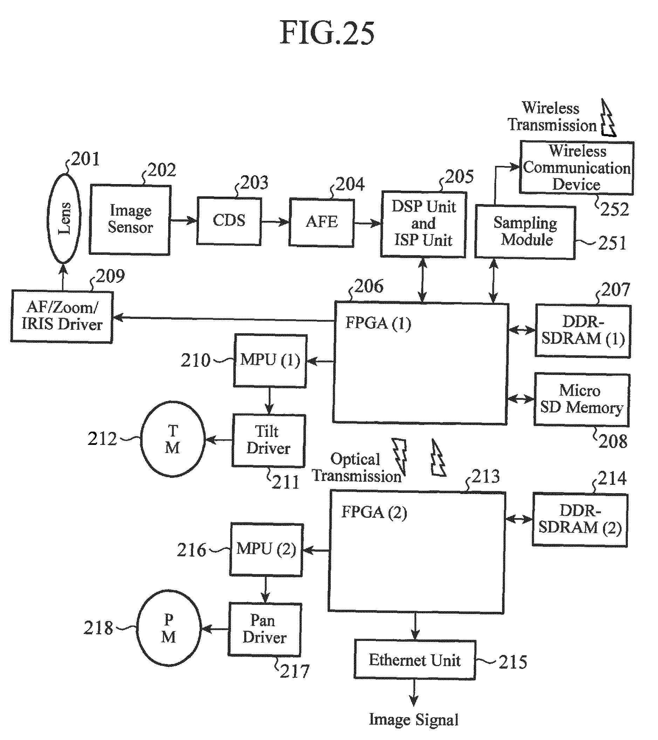

FIG. 25 is a functional block diagram of a rotatable surveillance camera 1a in accordance with Embodiment 2. In the figure, because the rotatable surveillance camera has the same configuration as that in accordance with Embodiment 1 shown in FIG. 2 with the exception that the rotatable surveillance camera includes a sampling module 251 and a wireless communication unit 252, corresponding components are designated by the same reference numerals and the explanation of the components will be omitted hereafter. Further, because the schematic diagram of a video security system to be shown in a drawing is the same as that shown in FIG. 1, Embodiment 2 will be described using the schematic diagram shown in FIG. 1.

The sampling module 251 is a circuit to retrieve and send data in a micro SD memory 208 and data in a storage server 8 according to a privacy area video acquisition request provided thereto. The wireless communication unit 252 is a one to, when receiving a privacy area video acquisition request via wireless communications, notify the sampling module 251 of this request, and to, when the sampling module 251 acquires privacy area video data, transmit this data to a network recorder 5 and other component.

Further, the privacy area acquirer to acquire privacy area data from the storage 12 or the storage server 8 to restore a recorded video image of a privacy-preserving area is configured with these sampling module 251 and wireless communication unit 252, and the implementation of an application for privacy area data acquisition that is disposed in a PC 2, the network recorder 5, or a recorder 9.

Next, operations of Embodiment 2 will be explained.

Hereafter, assume a case in which an administrator for the video security system needs to check image information (raw data) of a privacy area for some reason (e.g., a reason related to a crime).

The case in which it is necessary to check image information (raw data) about a privacy area is referred to as "time of a raw data check request" from here on.

At the time of a raw data check request,

a notification of authentication information is made together, and

a notification of specific information (e.g., frame delivery time information) in the image information (masked data) of a privacy area for which the image information (raw data) of the privacy area needs to be checked can be made.

In addition, notifications of a destination MAC address, a transmission source MAC Address, a model code, F/W versions (of camera, IP and recorder ), masking position coordinate information of each frame, recorder model information, and so on can be made.

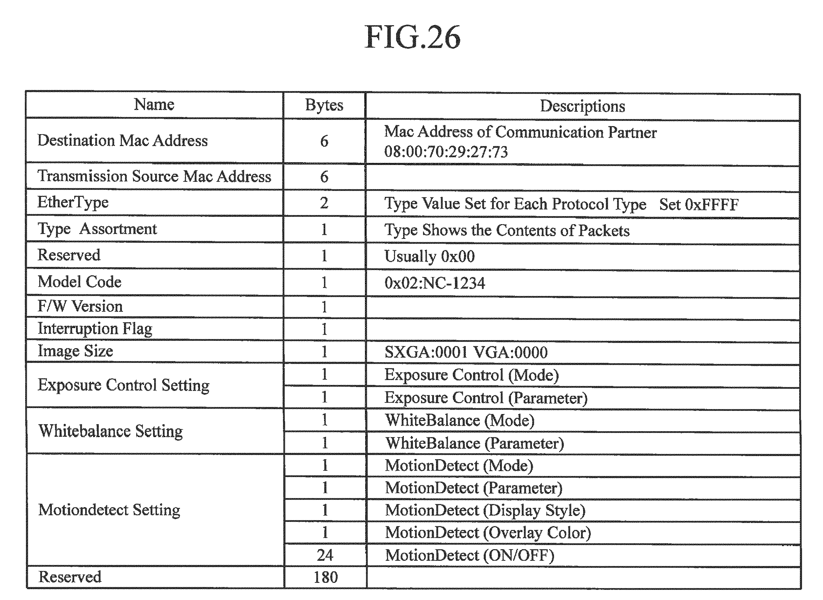

FIG. 26 is an explanatory drawing showing a network packet reception data format including such pieces of information.

The privacy area data acquirer which has received the request determines whether or not to be allowed to disclose the image information (raw data) of the privacy area according to the authentication information, and

checks the image information (raw data) of the privacy area on the basis of the specific information (e.g., frame delivery time information) in the image information (masked data) of the privacy area.

Hereafter, access patterns in the case in which the raw data is stored in the storage 12 and in the case in which the raw data is stored in the storage server 8 will be explained.

Pattern 1 (when the raw data is stored in the storage 12)

The system administrator makes a restoration request of the PC 2.

The system administrator inputs system administrator information (authentication information) (a password and so on) into the PC 2.

The PC 2 determines whether or not the system administrator information is true.

When the system administrator information is true, the PC 2 accepts the restoration request.

The system administrator inputs the specific information in the image information of the privacy area into the PC 2 (in order to cause the PC to perform sampling of the video recorded data).

The PC 2 makes a request of the rotatable surveillance camera 1a (rotatable part 11) to transfer the raw data to the network recorder 5. In addition, the PC notifies of the specific information in the image information of the privacy area. At that time, a network connection of the network recorder 5 with a network 6 is disconnected.

The rotatable part 11 transfers the raw data within a fixed time period for which the request for restoration has been made using the specific information in the image information of the privacy area to the network recorder 5. The raw data can be encrypted and transferred. The PC 2 makes a request of the network recorder 5 for restoration. The network recorder 5 restores the raw data and displays the raw data on a monitor 4. The network recorder 5 deletes the raw data which has become unnecessary.

Pattern 2 (when the raw data is stored in the storage 12)

The system administrator makes a restoration request of the PC 2.

The system administrator holds a noncontact IC card or the like to the rotatable surveillance camera 1a, and then inputs system administrator information (authentication information). In this case, as an authentication unit, the authentication unit, as explained in Embodiment 1, which is used at the time of detaching a micro SD memory 208 can be used.

The PC 2 determines whether or not the system administrator information is true via the rotatable surveillance camera 1a.

After that, the operation is performed in the same way as that shown in Pattern 1.

In above-mentioned Pattern 1 and Pattern 2, as a method of transferring the raw data from the storage 12 to the network recorder 5, there can be provided either one of the following methods:

(1) Method of detaching the storage 12 (micro SD memory 208) from the rotatable part 11 and then transferring the raw data;

(2) Method of transferring the raw data from the rotatable part 11 to the network recorder 5 via wireless;

(3) Method of connecting the rotatable part 11 and the network recorder 5 via a cable as needed, and then transferring the raw data; and

(4) Method of transferring the raw data via a rotatable base 10 and then a switching hub 3.

When the image information (raw data) of the privacy area is transmitted via the rotatable base 10, a network packet reception data format can be used. There is provided an advantage of eliminating the necessity to provide a new format newly.

In the network packet reception data format, settings of the distributed video including (1) the masking position coordinate information of each frame, (2) the delivery time information of each frame (a reference NTP server is shared between the recorder and the camera and distribution frame time synchronization is established by using a wireless module (1) 314 and a wireless module (2) 317), and (3) the recorder model information are stored in a reserved column (180 bytes). Then, a correspondence between the recorded video from the rotatable part (the image information of the privacy area (raw data)) and the recorded video in the recorder (the image information of the privacy area (masked data)) is established.

Pattern 3 (when the raw data is stored in the storage server 8)

The PC 2 and the monitor 4 are connected to the recorder 9.

The system administrator makes a restoration request of the PC 2.

The system administrator inputs system administrator information (authentication information) (a password and so on) into the PC 2.

The PC 2 determines whether or not the system administrator information is true. When the system administrator information is true, the PC 2 accepts the restoration request. The system administrator inputs the specific information in the image information of the privacy area into the PC 2 (in order to cause the PC to perform sampling of the video recorded data).

The PC 2 makes a request of the storage server 8 to transfer the raw data to the recorder 9. In addition, the PC notifies of the specific information in the image information of the privacy area.

The storage server 8 transfers the raw data within a fixed time period for which the request for restoration has been made using the specific information in the image information of the privacy area to the recorder 9. The raw data can be encrypted and transferred.

The PC 2 makes a request of the recorder 9 for restoration.

The recorder 9 restores the raw data and displays the raw data on the monitor 4.

The recorder 9 deletes the raw data which has become unnecessary.

In above-mentioned Pattern 3, the above-mentioned process can be performed after the raw data is transferred from the storage 12 to the storage server 8. However, authentication is carried out before the data transfer.

As a method of transferring the raw data from the storage 12 to the storage server 8, there can be provided either one of the following methods:

(1) Method of detaching the storage 12 (micro SD memory 208) from the rotatable part 11, and then transferring the raw data;
(2) Method of transferring the raw data from the rotatable part 11 to the storage server 8 via wireless; and
(3) Method of connecting the rotatable part 11 and the storage server 8 via a cable as needed, and then transferring the raw data.

Next, a transfer of data to the storage server 8, as a measure to an overflow of the privacy area data from the micro SD memory 208, will be explained.

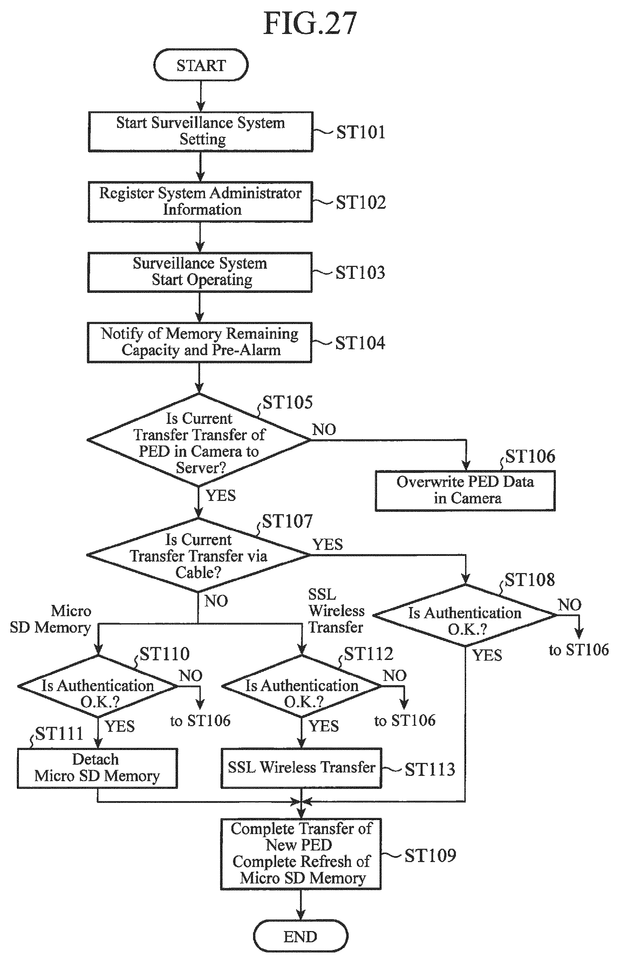

FIG. 27 is a flow chart showing an operation of transferring data to the storage server 8.

First, a predetermined setting is started for the surveillance system (step ST101), and system administrator information (e.g., information about a noncontact IC card, or the like) is registered in the rotatable part 11 of the rotatable surveillance camera 1a and the network recorder 5 (step ST102). After that, when the surveillance system starts operating (step ST103), a notification of a pre-alarm and/or the remaining capacity of the memory is provided (step ST104). This notification is provided for the system administrator's mobile terminal and the network recorder 5.

Next, whether or not the current data transfer is a transfer of the privacy area data (PED) in the camera to the storage server 8 is determined (step ST105), and, when the current data transfer is not such a data transfer, the data is overwritten in the micro SD memory 208 (step ST106). When it is determined in step ST105 that the current data transfer is a transfer of data to the storage server 8, it is determined first whether or not the current data transfer is a transfer via a cable (e.g., communications using a LAN cable or IEEE1394) (step ST107), and, when the current data transfer is a transfer via a cable, an authentication key comparison is performed (step ST108).

Then, when the data transfer is an unauthorized one, the data is overwritten in the micro SD memory 208 (step ST106). In contrast, when the data transfer is authorized in step ST108, the transfer of the new privacy area data is completed and the micro SD memory 208 is refreshed (step ST109).

In contrast, when it is determined in step ST107 that the current data transfer is not a transfer via a cable, but a transfer using the micro SD memory 208, an authentication key comparison is performed (step ST110) and, when the authentication result shows O.K., the micro SD memory 208 is detached (step ST111) and the sequence shifts to step ST109. Further, when it is determined in step ST107 that the current data transfer is an SSL (Secure Socket Layer) radio transfer, an authentication key comparison is performed (step ST110) and, when the authentication result shows O.K., an SSL radio transfer is started (step ST113) and the sequence shifts to step ST109. When it is determined in step ST110 or step ST112 that the current data transfer is an unauthorized one, the sequence shifts to step ST106.

It is assumed that the authentication key comparison process in above-mentioned steps ST108, ST110 and ST112 is carried out by both or either of the rotatable surveillance camera 1a and the storage server 8.

As previously explained, because the video security system of Embodiment 2 includes the privacy area acquirer that acquires yet-to-be-masked video data from the storage or the storage server and stores a recorded video image of a mask area, the recorded video image of the mask area can be acquired while high security is ensured.

Although the example in which R (red), G (green) and B (blue) primary color signals are input as the data input to the FPGA (1) 206 is shown in Embodiments 1 and 2, complementary color signals of Cy (bluish green), Ye (yellow), Mg (purple) and G (green) can be input in order to implement high-quality video transmission and high sensitivity. More specifically, a complementary color filter is inserted between a lens 201 and an image sensor 202 which are shown in FIGS. 2 and 25 to compensate for a reduction in the sensor sensitivity due to microfabrication of the image sensor 202 and improve the utilization efficiency of the incident light (a complementary color filter is used), thereby being able to implement an imaging system that makes it possible to visually recognize a high quality video even under low illumination.

With the configuration mentioned above, in addition to being applicable to a security system, as shown in Embodiments 1 and 2, for use in financial institutions, the video security system can also be applied to a security system for use in a residential street, a shopping district, or the like.

Further, as the authentication unit in Embodiments 1 and 2, any combination of authentications such as IC chip authentication, fingerprint authentication and iris recognition can be used.

Further, although it is assumed in Embodiments 1 and 2 that the storage server 8 is equipment which is not connected to the network 6, the storage server 8 can be equipment which is hard to directly access via the network 6 even if the storage server is connected to the network 6. For example, the storage server can be a database server or the like which is separated from the network by a firewall.

Further, although the example in which the micro SD memory 208 is disposed as the storage 12 is shown in Embodiments 1 and 2, the present invention is not limited to this example. As an alternative, one of various types of recording media, such as an optical disc, can be disposed.

Further, instead of the memory that can be freely attached and detached, a storage that is fixedly installed in the rotatable part 11 can be disposed as the storage 12. In the case in which the storage 12 is fixedly installed in this way, while this configuration is inferior from the viewpoint of the system administrator's convenience, as compared with a removable memory, the configuration is superior as an effect of prevention of illegal leakage of personal information.

Although the case of disposing the rotatable surveillance camera 1a provided with the rotatable base 10 and the rotatable part 11 as the surveillance camera is shown in Embodiments 1 and 2, another camera can be disposed as the surveillance camera. For example, an integrated camera, such as the dome surveillance camera 1b or the fixed surveillance camera 1c which is shown in FIG. 1, can be disposed as long as the communication channel to the storage 12 and the communication channel to the network recorder 5 are separated from each other. However, in the case of such a camera which does not include a rotary mechanism, it is necessary to combine lens optical design for correcting an object distortion occurring at the time of image capturing with an ultra wide angle, with image signal processing.

## Embodiment 3.

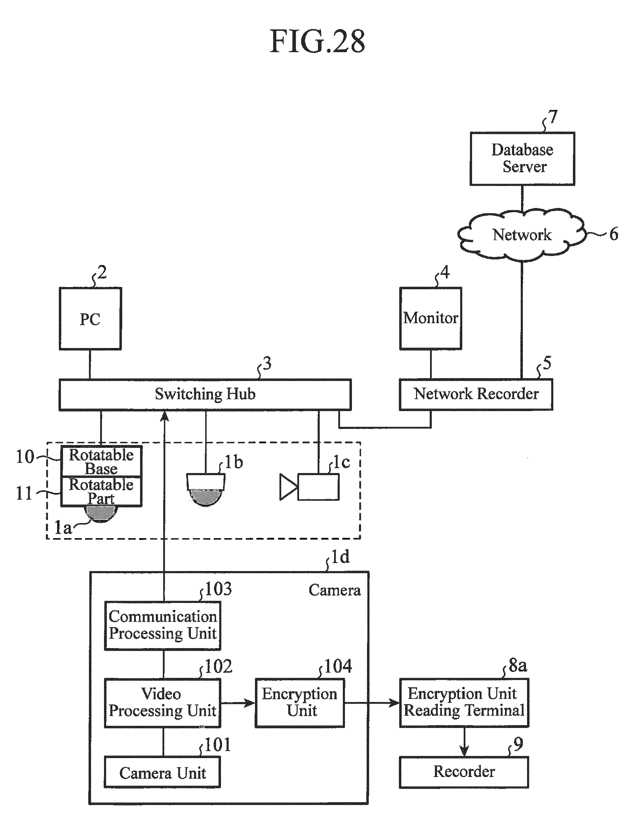

FIG. 28 is a schematic diagram showing a video security system in accordance with Embodiment 3 of the present invention.

The video security system shown in FIG. 28 includes a rotatable surveillance camera 1a, a dome surveillance camera 1b, a fixed surveillance camera 1c, a surveillance camera 1d having an arbitrary form, a personal computer (PC) 2, a switching hub 3, a monitor 4, a network recorder 5, a network 6, a database server 7, an encryption unit reading terminal 8a and a recorder 9. Because the components other than the surveillance camera 1d and the encryption unit reading terminal 8a are the same as those in accordance with Embodiment 1 shown in FIG. 1, the corresponding components are designated by the same reference numerals and the explanation of the components will be omitted hereafter.

The surveillance camera 1d in accordance with Embodiment 3 does not depend on the forms and the types of cameras. The surveillance camera 1d includes a camera unit 101, a video processing unit 102, a communication processing unit 103 and an encryption unit 104.

In the surveillance camera 1d, a preset mask area in a video captured by the camera unit 101 is masked by the video processing unit 102 and the video is encoded by the video processing unit 102, and the video is transmitted from the communication processing unit 103 to the switching hub 3. A portion, in the communication processing unit 103, to perform transmission of data to the switching hub 3 corresponds to the transmitter in accordance with Embodiment 1. In Embodiments 1 and 2, data which is encoded after a preset mask area is masked, i.e., data after a masking process is referred to as "masked data."

At that time, the video processing unit 102 encrypts the signal in which a mask area is not masked and stores the signal in the encryption unit 104. A portion to perform data storage in the encryption unit 104 corresponds to the storage in accordance with Embodiment 1. In Embodiments 1 and 2, data (signal) in which a mask area is not masked, i.e., yet-to-be-masked video data before the masking process is referred to as "privacy area data." The whole video signal on which the masking process is not performed can also be stored in the encryption unit 104. As an alternative, only when the video includes a mask area (a portion to be masked), the video can be stored in a state in which the masking process is not performed on the video. As compared with the case in which the whole of the video is stored, the amount of data stored can be reduced.

The encryption unit 104 is not connected to the communication processing unit 103. Therefore, there is no method of reading a video on which the masking process is not performed from another terminal on the network 6.

More specifically, the encryption unit 104 is not connected directly to the switching hub 3. The encryption unit 104 is disabled from being accessed directly from any other device on the network 6 via the switching hub 3. Four concrete examples of a method of disabling the encryption unit from being accessed directly will be disclosed as follows.

(1) The method of terminating a communications protocol between other devices on the network 6 and the communication processing unit 103 of the surveillance camera 1d at the communication processing unit 103 of the surveillance camera 1d.
(2) The method of making a communications protocol between other devices on the network 6 and the surveillance camera 1d be different from a communications protocol between the communication processing unit 103 and the video processing unit 102.
(3) The method of making the communications protocol between other devices on the network 6 and the surveillance camera 1d be different from a communications protocol between the communication processing unit 103 and the encryption unit 104.
(4) The method of making the communications protocol between other devices on the network 6 and the surveillance camera 1d be different from a communications protocol between the video processing unit 102 and the encryption unit 104.

As a result, because the encryption unit 104 is disabled from being accessed directly from any other device on the network 6 via the switching hub 3, there can be provided an advantage of disabling a video on which the masking process is not performed from being read from any other terminal on the network 6.

Even in a case of preventing the video processing unit 102 from being connected directly to the switching hub 3 in a similar way, the same advantage can be provided.

Further, the method, as mentioned above, of terminating a communications protocol at the transmitter is also a concrete example of the "transmission method of disabling the communications between the rotatable base 10 and the rotatable part 11 from directly accessing the communications between the rotatable base 10 and the network recorder 5" which is already disclosed in Embodiments 1 and 2. For example, there are two cases as described below.

(1) The case of terminating a communications protocol between the network recorder 5 which is another device on the network 6, and the rotatable base 10 at the rotatable base 10.
(2) The case of making the communications protocol between the network recorder 5 which is another device on the network 6, and the rotatable base 10 be different from the communications protocol between the rotatable base 10 and the rotatable part 11.

The encryption unit reading terminal 8a can read an encrypted video in which a portion to be masked is not masked from the encryption unit 104 of the surveillance camera 1d. Further, by transferring the video from the encryption unit reading terminal 8a to the recorder 9, the video on which the masking process is not performed can be played back by the recorder 9.

At that time, a configuration can be implemented in which the encryption unit 104 encrypts a video signal on which the masking process is not performed with a private key by using public/private key cryptography and a public key is provided for the recorder 9. In this case, the encryption unit reading terminal 8a can perform only copying of an encrypted signal, and any device other than the recorder 9 for which the public key is provided is disabled from playing back a video. Further, even if a method other than the public/private key cryptography is used, by providing keys for encryption and decryption only for the encryption unit 104 and the recorder 9, the same level of security is ensured.

As a result, as compared with the methods in accordance with Embodiments 1 and 2, while the advantage of "preventing illegal access to any mask area" remains being provided, an authentication function used at the time of accessing yet-to-be-masked video data can be eliminated. Therefore, an advantage of simplifying the hardware, and so on can be provided.

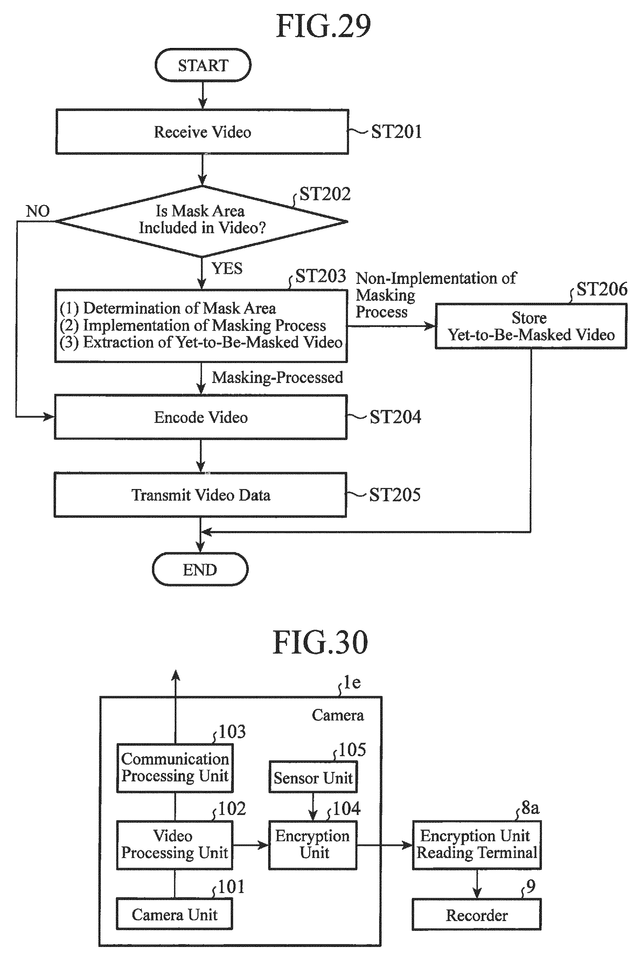

Next, an operation in accordance with Embodiment 3 will be explained by using a flow chart of FIG. 29.

First, in the surveillance camera 1d, the video processing unit 102 receives a video captured by the camera unit 101 (step ST201). At the time of reception, for example, it is assumed that the communications protocol between other devices on the network 6 and the surveillance camera 1e differs from the communications protocol between the communication processing unit 103 and the video processing unit 102.

Next, the video processing unit 102 determines whether or not a mask area is included in the received video (in the received frame) (step ST202). This determination can be carried out using the coordinates of the mask area and the coordinates of the received video. When it is determined in step ST202 that a mask area is included in the received video, the video processing unit shifts to step ST203.

In step ST203, the video processing unit 102 carries out: determination (1) of whether or not the area is a target to be masked; and

implementation (2) of the masking process on the mask area when the mask area is a target to be masked and extraction of data (signal) (yet-to-be-masked video) on which the masking process is not performed.

(3) The video processing unit does not perform the masking process when the mask area is not a target to be masked.

The video processing unit shifts to step ST204 as a process on the masked data. The video processing unit shifts to step ST206 as a process on the data on which the masking process is not performed.

In step ST204, the video processing unit 102 performs a process of encoding the video.

In step ST205, the video processing unit 102 transmits the video data after encoding to the communication processing unit 103.

In step ST206, the video processing unit 102 transmits the yet-to-be-masked video to the encryption unit 104. The encryption unit 104 encrypts and stores the yet-to-be-masked video.

When it is determined in step ST202 that a mask area is not included in the video, the video processing unit skips the process of step ST203 and shifts to step ST204.

Although the method of directly connecting the encryption unit reading terminal 8a to the encryption unit 104 to read a video on which the masking process is not performed is explained in Embodiment 3, by separately setting up a dedicated encrypted route, e.g., an encrypted tunnel connection between the encryption 104 and the encryption unit reading terminal 8a, and then connecting the communication processing unit 103 as a route of the tunnel, an encrypted video on which the masking process is not performed can also be read over the network. Even in this case, the superiority of the present invention does not change.

Although the case in which the whole of a video on which the masking process is not performed by the encryption unit 104 is stored is explained in Embodiment 3, only a preset mask area (target to be masked), instead of the whole of the video, can be stored in a state in which the mask area is not masked. At that time, information required at the time of a playback, such as the coordinates of the mask area, and accompanying information (mask start/end times, place information, mask setting information, etc.) about the video of the portion to be masked can also be stored simultaneously. Even in this case, the superiority of the present invention does not change.

There is provided an advantage of being able to reduce the amount of data stored as compared with the case in which the whole of the video is stored. By storing the coordinates of the mask area, the mask area and the other region (region on which the masking process is not performed) can be combined and the combined result can be displayed.

In the case of storing only a preset mask area, instead of the whole of a video, in a state in which the mask area is not masked, the encryption unit reading terminal 8a can be configured in such a way as to specify the coordinates which the "data in which the mask area is not masked" requires to acquire only required data from the encryption unit 104.

When, for example, a plurality of mask areas are included in the image, only the "data in which the mask areas are not masked" of a required portion can be extracted, and the system can be configured so as to place greater importance on privacy. Further, there can be provided an advantage of reducing the volume of traffic between the encryption unit 104 and the encryption unit reading terminals 8a.

As previously explained, because in the surveillance camera in accordance with Embodiment 3 the storage encrypts yet-to-be-masked video data and stores the video data encrypted thereby, illegal access to the yet-to-be-masked video data can be prevented and an authentication function used at the time of accessing the yet-to-be-masked video data can also be eliminated. Further, simplification of the hardware can be achieved.

Further, because in the surveillance camera in accordance with Embodiment 3 the communications protocol used for communications of video data between the video recorder and the transmitter is terminated at the transmitter, illegal access to the yet-to-be-masked video data can be prevented.

Embodiment 4.

FIG. 30 is a schematic diagram showing a surveillance camera 1e with a function of preventing an encryption unit from being removed which is used for a video security system in accordance with Embodiment 4 of the present invention.

The surveillance camera 1e in accordance with Embodiment 4 includes a sensor unit 105 to detect a shock at a time when the surveillance camera 1e is destroyed and videos stored in an encryption unit 104 are extracted, to destroy the videos in the encryption unit 104. As an alternative, the sensor unit 105 can be configured in such a way as to destroy data (signals) (privacy area data) in each of which mask areas are not masked. This sensor unit 105 makes it impossible to extract the videos in the encryption unit 104 according to any procedure other than a proper procedure.

Because the other components other than this component are the same as the components in the surveillance camera 1d shown in FIG. 28, corresponding components are designated by the same reference numerals and the explanation of the components will be omitted hereafter. Further, the components of the video security system other than the surveillance camera 1e are the same as those in accordance with any one of Embodiments 1 to 3.

The sensor unit 105 can determine whether or not an authentication function being used at a time when privacy area data is accessed, which is disclosed in Embodiments 1 and 2, is performed correctly. The sensor unit can be configured in such a way as to, when determining that the authentication function is not performed correctly, destroy data (signals) (privacy area data) in each of which mask areas are not masked.

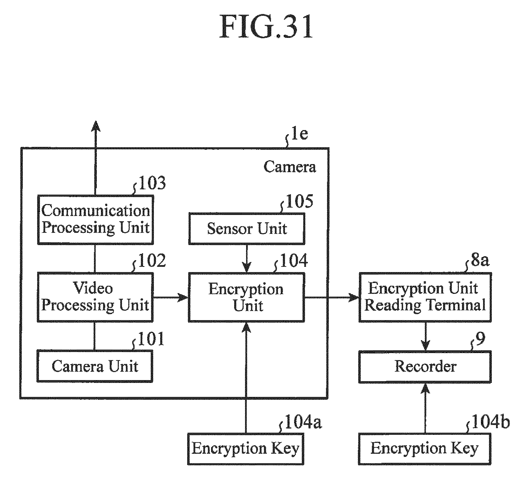

In the case of using a public/private key method in Embodiment 4, a private key which is an encryption key 104a for encryption is provided for the encryption unit 104 while a public key which is an encryption key 104b for decryption is provided for a recorder 9, as shown in FIG. 31. In this configuration, the sensor unit 105 can be configured in such a way as to, when destroying data in which mask areas are not masked, destroy the private key in the encryption 104 simultaneously.

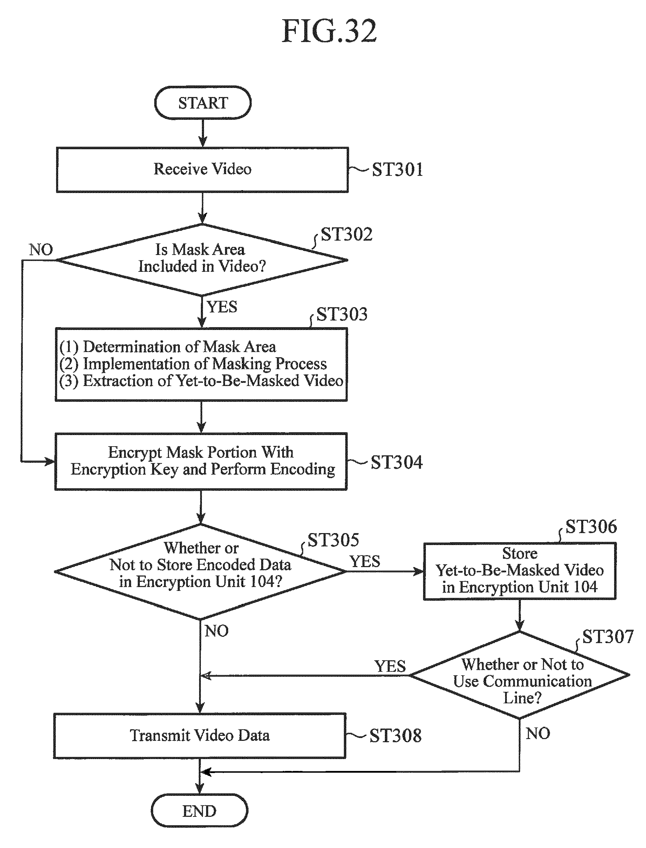

In Embodiment 4, when a portion to be masked is encrypted by using the encryption key 104a and a masking process is then performed, a network recorder 5 which does not have the encryption key 104b cannot decrypt the portion to be masked. Therefore, although there remains a risk occurring at a time when the encryption key leaks, it is also possible to distribute a masked video via a communication processing unit 103. An operation in such a case will be explained hereafter by using a flow chart of FIG. 32.

First, in the surveillance camera 1e, a video processing unit 102 receives a video captured by a camera unit 101 (step ST301). At the time of reception, for example, it is assumed that a communications protocol between other devices on a network 6 and the surveillance camera 1e differs from a communications protocol between the communication processing unit 103 and the video processing unit 102.

Next, the video processing unit 102 determines whether or not a mask area is included in the received video (in the received frame) (step ST302). This determination can be carried out using the coordinates of the mask area and the coordinates of the received video. When it is determined in step ST302 that a mask area is included in the received video, the video processing unit shifts to step ST303.

In step ST303, the video processing unit 102 carries out:

-    determination (1) of whether or not the mask area is a target to be masked; and
-    implementation (2) of the masking process on the mask area when the mask area is a target to be masked and extraction of data (signal) (yet-to-be-masked video) on which the masking process is not performed.
      (3) The video processing unit does not perform the masking process when the mask area is not a target to be masked.

Next, the video processing unit 102 performs a process of encoding the video (step ST304). At that time, as to the mask area determined in step ST303, the video processing unit performs the encoding by using the encryption key.

In contrast, when, in above-mentioned step ST302, determining that a mask area is not included in the received video, the video processing unit skips the process of step ST303 and shifts to step ST304.

Next, the video processing unit 102 determines whether or not to store the data after encoding in the encryption unit 104 (step ST305). This determining process can be carried out on a per frame basis. As an alternative, the determining process can be carried out on a per mask area basis. When, in step ST305, determining to store the data after encoding in the encryption unit, the video processing unit 102 transmits the video on which it has performed the masking process and the encoding process to the encryption unit 104. The encryption unit 104 stores the video after the masking process therein (step ST306).

After that, the encryption unit 104 determines whether or not to distribute the video data by using a communication line (step ST307). When, in step ST307, determining to distribute the video data by using a communication line, the camera shifts to step ST308. In contrast, when, in step ST307, determining not to distribute the video data by using a communication line, the surveillance camera ends the processing. In step ST308, the communication processing unit 103 transmits the video data after encoding to an external device such as the network recorder 5. Further, when, in above-mentioned step ST305, determining not to store the video in the encryption unit 104, the surveillance camera shifts to step ST308.

Although the example which, as a "mask area" shown in Embodiments 1 to 4, a specific portion (having fixed coordinates) in the screen is masked is explained above, the above embodiments can be applied to a case in which specific targets, such as people's faces or license plates, are detected and masked. Specific targets are set in advance, and are detected by the camera unit 101 or the video processing unit 102. Even in this case, the superiority of the present invention does not change.

As previously explained, because the surveillance camera in accordance with Embodiment 4 is configured in such a way that, when a target is set in advance and the target is detected by processing acquired video data the detected target is determined to be a mask area, the surveillance camera can determine a mask area corresponding to each target.

While the invention has been described in its preferred embodiments, it is to be understood that an arbitrary combination of two or more of the above-mentioned embodiments can be made, various changes can be made in an arbitrary component in accordance with any one of the above-mentioned embodiments, and an arbitrary component in accordance with any one of the above-mentioned embodiments can be omitted within the scope of the invention.

INDUSTRIAL APPLICABILITY

As mentioned above, the surveillance camera in accordance with the present invention performs a masking process on a mask area of a video acquired thereby and also transmits masked data after the masking process to a video recorder, the surveillance camera is suitable for use in video security systems introduced into management systems for use in financial institutions, companies and government and municipal offices, distribution systems, and so on.

EXPLANATIONS OF REFERENCE NUMERALS

| | |
|---|---|
| 1a | rotatable surveillance camera |
| 1b | dome surveillance camera |
| 1c | fixed surveillance camera |
| 1d, 1e | surveillance camera |
| 2 | PC |
| 3 | switching hub |
| 4 | monitor |
| 5 | network recorder |
| 6 | network |
| 7 | database server |
| 8 | storage server |
| 8a | encryption unit reading terminal |
| 9 | recorder |
| 10 | rotatable base |
| 11 | rotatable part |
| 12 | storage |
| 101 | camera unit |
| 102 | video processing unit |
| 103 | communication processing unit |
| 104 | encryption unit |
| 105 | sensor unit |
| 104a | encryption key for encryption |
| 104b | encryption key for decryption |
| 201 | lens |
| 202 | image sensor |
| 203 | CDS |
| 204 | AFE |
| 205 | DSP unit and ISP unit |
| 206 | FPGA (1) |
| 207 | DDR-SDRAM (1) |
| 208 | micro SD memory |
| 209 | AF/Zoom/IRIS driver |
| 210 | MPU (1) |
| 211 | tilt driver |
| 212 | tilt motor |
| 213 | FPGA (2) |
| 214 | DDR-SDRAM (2) |
| 215 | Ethernet unit |
| 216 | MPU (2) |
| 217 | pan driver |
| 218 | pan motor |
| 251 | sampling module |
| 252 | wireless communication unit |
| 300 | digital clock manager |
| 301 | high pass filter |
| 302 | moving object detecting circuit |
| 303 | mask signal processor |
| 304 | image buffer |
| 305 | 31B1B circuit |
| 306 | light transmit generator |
| 307 | micro SD memory interface |
| 308 | reset generating circuit mechanism |
| 309 | micro SD memory contact ON/OFF determination circuit |
| 310 | MPU (1) interface |
| 311 | noise control filter |
| 312 | infrared ray communication receive unit |
| 313 | frequency analyzer |
| 314 | wireless module (1) |
| 315 | low voltage differential signaling transmit unit |
| 316 | low voltage differential signaling receive unit |
| 317 | wireless module (2) |
| 318 | infrared ray communication transmit unit |
| 319 | MPU (2) interface |
| 320 | MPCM, DUMM circuit |
| 321 | light receive module |
| 322 | 1B31B circuit |
| 323 | PicoXYZ filter |
| 324 | PCU bus |
| 325 | f requency analyzer. |

**Claims**

1. A surveillance camera that is connectable to a video recorder and that performs a masking process on a mask area of an acquired video,
   the surveillance camera comprising:

   - a storage for storing yet-to-be-masked video data before the masking process; and
   - a transmitter for transmitting masked data after the masking process, to the video recorder.

2. The surveillance camera according to claim 1, wherein the storage performs authentication that enables the yet-to-be-masked video data to be accessed.

3. The surveillance camera according to claim 1, wherein the storage encrypts and stores the yet-to-be-masked video data.

4. The surveillance camera according to claim 1, wherein the storage is a recording medium capable of being attached and detached freely.

5. The surveillance camera according to claim 1, wherein a communications protocol used for communications of video data between the video recorder and the transmitter is terminated at the transmitter.

6. The surveillance camera according to claim 1, wherein the surveillance camera is a camera with rotation capability which includes a rotatable base and a rotatable part that are disposed separately, the storage being disposed in the rotatable part, and a communication channel with the video recorder being connected to the rotatable base.

7. The surveillance camera according to claim 1, wherein the mask area is comprised of a preset area.

8. The surveillance camera according to claim 1, wherein, when a target being set in advance is detected by processing data indicating an acquired video, the surveillance camera determines the target to be the mask area.

9. A video security system that performs a masking process on a mask area of a video acquired by a surveillance camera, wherein the surveillance camera comprises:

- a storage for storing yet-to-be-masked video data before the masking process; and
- a transmitter for transmitting masked data after the masking process, to a video recorder.

10. The video security system according to claim 9, wherein the video security system comprises a storage server that performs a transfer of the yet-to-be-masked video data stored in the storage to store the yet-to-be-masked video data, the storage server performing the transfer by using a communication channel that is separated from a communication channel from the surveillance camera to the video recorder.

11. The video security system according to claim 10, wherein the video security system comprises a privacy area acquirer for acquiring the yet-to-be-masked video data from the storage or the storage server to restore a recorded video of the mask area.

12. A surveillance camera with rotation capability that includes a rotatable base and a rotatable part and that performs masking on a privacy-preserving area which is a target in a video acquired by the rotatable part, the surveillance camera comprising:

- a registered mask table in which a registered mask for performing the masking is converted into coordinate information corresponding to a rotation state of the rotatable part; and
- a masking device to acquire the coordinate information from the registered mask table according to the rotation state of the rotatable part, and to perform a masking process using the co-

ordinate information.

# FIG.1

# FIG.2

# FIG.3

## FPGA(1) 206

DCM — 300

314 — Wireless Module (1)

SDRAM (1) I/F

301
HPF

302
Moving Object Detecting Circuit

303
MPCM

31-bit RGB

Micro SD Memory I/F

311
NC Filter

310
MPU (1) Interface

304
Image Buffer

Micro SD Memory Interface

3bit

Microcomputer I/F

309
Micro SD Memory Contact ON/OFF Determination Circuit

313
Frequency Analyzer

LOGIC RA1 DCM(Clock)

312
Infrared Ray Communication Receiver

305
31B1B Circuit

306
Light Transmit Generator

307
Reset Generating Circuit Mechanism

308

Low Voltage Differential Signaling Transmit Unit ~ 315

SDRAM (1) I/F

Sampling at 2.16THz
(Infrared Ray Communications, Max 300THz)

2.16THz LVDS Communications
(Blue Light Communications, Max 789THz)

## FPGA (2) 213

318
Infrared Ray Communication Transmit Unit

316
Low Voltage Differential Signaling Receive Unit

324
PCU Bus

Microcomputer I/F

311
NC Filter

319
MPU (2) Interface

321
Light Receive Module

322
1B31B Circuit

Conversion into 31-bit Signal

3bit

320
MPCM DUMM Circuit

Recovery MASK

317
Wireless Module (2)

323
PicoXYZ Filter

Recovery MASK

325

Frequency Analyzer

LOGIC RA2 DCM (Clock)

SDRAM (2) I/F

SDRAM (2) I/F

FIG.4

FIG.5

EP 3 026 897 A1

# FIG.6

**601** AFE Synchronization Signal Generating Circuit
- PORCLK
- POGCLK
- POBCLK
- XOAHD
- XOAVD
} To: AFE (AD9979)

PXADH

**602** DSP Synchronization Signal Generating Circuit
- PO8FSC
- POFI
- XOHD
- XOVD
} To: DSP

**603** Various Control Signals Generating Circuit
- POTDCK To: 74LVC257
- XOWEN To: DSP
- To: ANALOG LSI (UPC5024) POCDWIN

PIMCK

XIRST

FRAME SLOW

EP 3 026 897 A1

# FIG.7

EP 3 026 897 A1

FIG.8

Generation of WEN Signal

EP 3 026 897 A1

EP 3 026 897 A1

# FIG.9

28

# FIG.10

Screen at the Time of
Mask Setting

Z

Mask Area

A                    B

L        M

Y

P        N

D                    C

# FIG.11

$2 \times f1 \times \tan^{-1}\{(\phi m - \phi n)/2\}$

$R_H$ ——— CCD Surface

——— Lens Surface

$\phi n - \phi m$

2H: Amount of Movement=2Q:$R_H$

Amount of Movement=$[2 \times H \times f1 \times \tan^{-1}\{(\phi m - \phi n)/2\}]/Q$

# FIG.12

$2 \times f2 \times \tan^{-1}\{(\theta m - \theta n)/2\}$

$R_V$ ——— CCD Surface

——— Lens Surface

$\theta n - \theta m$

2V: Amount of Movement=2P:$R_V$

Amount of Movement=$[2 \times V \times f2 \times \tan^{-1}\{(\theta m - \theta n)/2\}]/P$

# FIG.13

Mask Area

Current Frame Image

Mask Area

θ

EP 3 026 897 A1

# FIG.14

(a)

(b)

32

# FIG.15

START

Register Mask Area
MaskPositionSet　～ST1

Calculate Mask Area in Current Screen
MaskAreaReport　～ST2

PTZ Operation of Camera? ⌐ST3　　YES

NO

END

# FIG.16

Z ← (Direction toward Ground Surface When Camera Is Ceiling-Mounted)

Center Position of Current Screen

$\theta v$

$\phi v$

X

Y

# FIG.17

# FIG.18

# FIG.19

(a)

Mask Area

S
(Xm,Ym)

Y"

Current Screen

S"
(0,0)

X"

ViewVsize/2

ViewHsize/2

(b)

f2

V

p
p

O

R2

S"

V

(c)

Current Frame Image

S"

θv"

O"

# FIG.20

# FIG.21

# FIG.22

# FIG.23

| | Optical Axis Center [mm] X Axis Coordinates | Optical Axis Center [mm] Y Axis Coordinates | Optical Axis Center [mm] Z Axis Coordinates | Focal Distance [mm] Optical Magnification [Times] | Electronic Zoom Magnification [Times] | Pan Angle [Degree] | Tilt Angle [Degree] | Angle-of-View Center (CAM Space) Sensor Center Mask Area (CAM Space) Mask Area (Imaging Surface) |
|---|---|---|---|---|---|---|---|---|
| Initial State at the Time of Mask Registration | O (0) | O (0) | O (0) | $f_0$ | $E_{Z0}$ | $\phi_m = \phi_V$ | $\theta_m = \theta_V$ | S Coordinates E Coordinates LMNP (Mask Center: S Coordinates) lmnp (Mask Center: E Coordinates) |
| State Transition (First-Order Optical Axis Displacement) | O' $(\delta)$ | O' $(\gamma)$ | O' $(\varepsilon)$ | $f_1$ | $E_{Z1}$ | $\phi_V{}'$ | $\theta_V{}'$ | S' Coordinates E' Coordinates L'M'N'P'(MCP) (Mask Center: L'P' Middle Point) l'm'n'p' (Mask Center: l'p' Middle Point) |
| State Transition (Second-Order Optical Axis Displacement) | O" $(\delta')$ | O" $(\gamma')$ | O" $(\varepsilon')$ | $f_2$ | $E_{Z2}$ | $\phi_V{}''$ | $\theta_V{}''$ | S" Coordinates E" Coordinates L"M"N"P" (Mask Center: MCP$^{(2)}$) l"m"n"p" (Mask Center: mcp$^{(2)}$) |

All States Z: $0 \leq \phi V \leq 360$ (Step: 0.1[deg]) , $-90 \leq \theta V \leq 90$ (Resolution: 0.1[deg])
Optical Axis Center Coordinates after Optical Axis Displacement from OS Angle-of-View Center Coordinates $MCP^{(Z)}(Xm^{(Z)}, Ym^{(Z)}, Zm^{(Z)})$

EP 3 026 897 A1

# FIG.24

| | Optical Axis Center [mm] X Axis Coordinates | Optical Axis Center [mm] Y Axis Coordinates | Optical Axis Center [mm] Z Axis Coordinates | Focal Distance [mm] Optical Magnification [Times] | Electronic Zoom Magnification [Times] | Pan Angle [Degree] | Tilt Angle [Degree] | Angle-of-View Center (CAM Space) Sensor Center Mask Area (CAM Space) Mask Area (Imaging Surface) |
|---|---|---|---|---|---|---|---|---|
| | $\vdots$ | $\vdots$ | $\vdots$ | $\vdots$ | $\vdots$ | $\vdots$ | $\vdots$ | $\vdots$ |
| State Transition (gth-Order Optical Axis Displacement) | $O^{(g)}$ $(\delta^{(g)})$ | $O^{(g)}$ $(\gamma^{(g)})$ | $O^{(g)}$ $(\varepsilon^{(g)})$ | $f_g$ | $E_{Zg}$ | $\phi_V^{(g)}$ | $\theta_V^{(g)}$ | $S^{(g)}$ Coordinates $E^{(g)}$ Coordinates $L^{(g)}M^{(g)}N^{(g)}p^{(g)}$ (Mask Center: $MCP^{(g)}$) $l^{(g)}m^{(g)}n^{(g)}p^{(g)}$ (Mask Center: $mcp^{(g)}$) |
| | $\vdots$ | $\vdots$ | $\vdots$ | $\vdots$ | $\vdots$ | $\vdots$ | $\vdots$ | $\vdots$ |
| State Transition (Zth-Order Optical Axis Displacement) | $O^{(Z)}$ $(\delta^{(Z)})$ | $O^{(Z)}$ $(\gamma^{(Z)})$ | $O^{(Z)}$ $(\varepsilon^{(Z)})$ | $f_Z$ | $E_{ZZ}$ | $\phi_V^{(Z)}$ | $\theta_V^{(Z)}$ | $S^{(Z)}$ Coordinates $E^{(Z)}$ Coordinates $L^{(Z)}M^{(Z)}N^{(Z)}p^{(Z)}$ (Mask Center: $MCP^{(Z)}$) $l^{(Z)}m^{(Z)}n^{(Z)}p^{(Z)}$ (Mask Center: $mcp^{(Z)}$) |

All States Z: $0 \le \phi V \le 360$ (Step: 0.1[deg]) , $-90 \le \theta V \le 90$ (Resolution: 0.1[deg])
Optical Axis Center Coordinates after Optical Axis Displacement from OS Angle-of-View Center Coordinates $MCP^{(Z)}(Xm^{(Z)},Ym^{(Z)},Zm^{(Z)})$

EP 3 026 897 A1

# FIG.25

Wireless
Transmission

Wireless
Communication
Device
252

201 Lens
202 Image Sensor
203 CDS
204 AFE
205 DSP Unit and ISP Unit
Sampling Module 251

209 AF/Zoom/ IRIS Driver

206 FPGA (1)
207 DDR-SDRAM (1)

210 MPU (1)

Micro SD Memory
208

212 T M
211 Tilt Driver

Optical Transmission

213 FPGA (2)
214 DDR-SDRAM (2)

216 MPU (2)

218 P M
217 Pan Driver

Ethernet Unit 215

Image Signal

# FIG.26

| Name | Bytes | Descriptions |
|---|---|---|
| Destination Mac Address | 6 | Mac Address of Communication Partner 08:00:70:29:27:73 |
| Transmission Source Mac Address | 6 | |
| EtherType | 2 | Type Value Set for Each Protocol Type   Set 0xFFFF |
| Type  Assortment | 1 | Type Shows the Contents of Packets |
| Reserved | 1 | Usually 0x00 |
| Model Code | 1 | 0x02:NC-1234 |
| F/W Version | 1 | |
| Interruption Flag | 1 | |
| Image Size | 1 | SXGA:0001 VGA:0000 |
| Exposure Control Setting | 1 | Exposure Control (Mode) |
| | 1 | Exposure Control (Parameter) |
| Whitebalance Setting | 1 | WhiteBalance (Mode) |
| | 1 | WhiteBalance (Parameter) |
| Motiondetect Setting | 1 | MotionDetect (Mode) |
| | 1 | MotionDetect (Parameter) |
| | 1 | MotionDetect (Display Style) |
| | 1 | MotionDetect (Overlay Color) |
| | 24 | MotionDetect (ON/OFF) |
| Reserved | 180 | |

# FIG.27

```
                    ┌─────────┐
                    │  START  │
                    └─────────┘
                         │
                         ▼
        ┌──────────────────────────────┐
        │  Start Surveillance System    │──ST101
        │           Setting             │
        └──────────────────────────────┘
                         │
                         ▼
        ┌──────────────────────────────┐
        │ Register System Administrator │──ST102
        │          Information          │
        └──────────────────────────────┘
                         │
                         ▼
        ┌──────────────────────────────┐
        │     Surveillance System       │──ST103
        │       Start Operating         │
        └──────────────────────────────┘
                         │
                         ▼
        ┌──────────────────────────────┐
        │ Notify of Memory Remaining    │──ST104
        │  Capacity and Pre-Alarm       │
        └──────────────────────────────┘
                         │
                         ▼         ST105
                    ╱─────────────╲
                   ╱  Is Current    ╲    NO      ┌────────────────┐
                  ╱ Transfer Transfer ╲──────────│  ST106         │
                  ╲  of PED in Camera ╱          │ Overwrite PED   │
                   ╲   to Server?    ╱           │ Data in Camera  │
                    ╲───────────────╱            └────────────────┘
                         │ YES
                         ▼         ST107
                    ╱─────────────╲
                   ╱  Is Current    ╲   YES              ST108
                  ╱ Transfer Transfer╲────────────  ╱─────────────╲   NO
                  ╲   via Cable?     ╱   SSL        ╱ Is Authentication╲────
                   ╲───────────────╱   Wireless    ╲     O.K.?      ╱   to ST106
      Micro             │ NO         Transfer       ╲─────────────╱
     SD Memory          │                                │ YES
              ┌─────────┴──────────┐                     │
              ▼         ST110       ▼        ST112        │
         ╱─────────────╲      ╱─────────────╲            │
        ╱ Is Authentication╲NO ╱ Is Authentication╲NO      │
        ╲     O.K.?      ╱──  ╲     O.K.?      ╱──         │
         ╲─────────────╱  to   ╲─────────────╱  to ST106  │
   ST111       │ YES    ST106       │ YES                 │
        ┌──────────────┐      ┌──────────────────┐        │
        │   Detach     │      │ SSL Wireless      │──ST113 │
        │ Micro SD     │      │   Transfer        │        │
        │  Memory      │      └──────────────────┘        │
        └──────────────┘             │                    │
              └──────────────┬───────┴────────────────────┘
                             ▼
                  ┌──────────────────────┐
                  │ Complete Transfer of  │
                  │      New PED          │──ST109
                  │ Complete Refresh of   │
                  │   Micro SD Memory     │
                  └──────────────────────┘
                             │
                             ▼
                       ┌─────────┐
                       │   END   │
                       └─────────┘
```

# FIG.28

Database Server ~7

Network ~6

PC ~2

Monitor ~4

Switching Hub ~3

Network Recorder ~5

10 — Rotatable Base

11 — Rotatable Part

1a

1b

1c

Camera ~1d

Communication Processing Unit ~103

Video Processing Unit ~102

Encryption Unit ~104

Encryption Unit Reading Terminal ~8a

Camera Unit ~101

Recorder ~9

# FIG.29

```
                    ┌─────────────┐
                    │    START    │
                    └──────┬──────┘
                           │
                           ▼
        ┌──────────────────────────────────┐
        │          Receive Video           │──ST201
        └──────────────────┬───────────────┘
                           │
                           ▼
              ⟨ ST202
   NO      ╱─────────────────────╲
◄──────── ⟨   Is Mask Area        ⟩
          ╲  Included in Video?  ╱
           ╲─────────────────────╱
                    │ YES         Non-Implementation of
                    ▼  ┌ST203     Masking          ┌ST206
        ┌──────────────────────────────┐  Process ┌──────────────────────┐
        │ (1) Determination of Mask Area│─────────►│        Store         │
        │ (2) Implementation of Masking │          │ Yet-to-Be-Masked Video│
        │     Process                   │          └───────────┬──────────┘
        │ (3) Extraction of Yet-to-Be-  │                      │
        │     Masked Video              │                      │
        └───────────────┬───────────────┘                     │
                        │ Masking-Processed                    │
                        ▼                                      │
        ┌──────────────────────────────┐                      │
        │          Encode Video        │──ST204               │
        └───────────────┬───────────────┘                     │
                        │                                      │
                        ▼                                      │
        ┌──────────────────────────────┐                      │
        │      Transmit Video Data     │──ST205               │
        └───────────────┬───────────────┘                     │
                        │◄─────────────────────────────────────┘
                        ▼
                 ┌─────────────┐
                 │     END     │
                 └─────────────┘
```

# FIG.30

47

# FIG.31

Camera 1e

103 Communication Processing Unit

105 Sensor Unit

102 Video Processing Unit

104 Encryption Unit

101 Camera Unit

8a Encryption Unit Reading Terminal

9 Recorder

104a Encryption Key

104b Encryption Key

# FIG.32

```
                    ┌─────────────┐
                    │    START    │
                    └──────┬──────┘
                           │
              ┌────────────▼────────────┐
              │      Receive Video      │───ST301
              └────────────┬────────────┘
                           │
                      ╱────▼────╲
     NO         ╱                    ╲    ┌─ST302
    ◄──────────       Is Mask Area
                ╲   Included in Video?  ╱
                      ╲────┬────╱
                           │YES
                           │      ┌─ST303
              ┌────────────▼────────────────────────┐
              │ (1) Determination of Mask Area       │
              │ (2) Implementation of Masking Process│
              │ (3) Extraction of Yet-to-Be-Masked Video│
              └────────────┬────────────────────────┘
                           │
              ┌────────────▼────────────┐
              │  Encrypt Mask Portion With│
              │Encryption Key and Perform Encoding│───ST304
              └────────────┬────────────┘
                           │
```

Whether or Not to Store Encoded Data in Encryption Unit 104? — ST305

YES → Store Yet-to-Be-Masked Video in Encryption Unit 104 — ST306

Whether or Not to Use Communication Line? — ST307

NO → Transmit Video Data — ST308

END

## INTERNATIONAL SEARCH REPORT

| International application No. |
| --- |
| PCT/JP2014/069586 |

A. CLASSIFICATION OF SUBJECT MATTER
*H04N5/765*(2006.01)i, *H04N5/225*(2006.01)i, *H04N5/232*(2006.01)i, *H04N7/18* (2006.01)i

According to International Patent Classification (IPC) or to both national classification and IPC

B. FIELDS SEARCHED

Minimum documentation searched (classification system followed by classification symbols)
H04N5/765, H04N5/225, H04N5/232, H04N7/18

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2013-110512 A (Canon Inc.),<br>06 June 2013 (06.06.2013),<br>paragraphs [0010] to [0016], [0050], [0053] to [0054]; fig. 1, 7<br>(Family: none) | 1,3,5,7,9<br>2,4,6,8<br>10-11 |
| Y<br>A | JP 2008-288744 A (Hitachi, Ltd.),<br>27 November 2008 (27.11.2008),<br>paragraphs [0013] to [0023], [0044]; fig. 1, 11<br>(Family: none) | 2<br>10-11 |
| Y | JP 2008-78793 A (Casio Computer Co., Ltd.),<br>03 April 2008 (03.04.2008),<br>paragraphs [0010] to [0016], [0023] to [0027], [0039] to [0044]; fig. 1, 4<br>(Family: none) | 4,6 |

| ☒ Further documents are listed in the continuation of Box C. | ☐ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 September, 2014 (30.09.14) | Date of mailing of the international search report<br>07 October, 2014 (07.10.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

50

**INTERNATIONAL SEARCH REPORT**

| International application No. |
| --- |
| PCT/JP2014/069586 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2003-61076 A (Sogo Keibi Hosho Co., Ltd.), 28 February 2003 (28.02.2003), paragraph [0087] (Family: none) | 8 |
| X | JP 2013-66121 A (Hitachi, Ltd.), 11 April 2013 (11.04.2013), paragraphs [0001], [0026], [0028] to [0029], [0039], [0063] & US 2013/0070092 A1 & CN 103024347 A | 12 |

Form PCT/ISA/210 (continuation of second sheet) (July 2009)

## INTERNATIONAL SEARCH REPORT

International application No.

PCT/JP2014/069586

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

    (See extra sheet.)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

**INTERNATIONAL SEARCH REPORT**

International application No.

PCT/JP2014/069586

<u>Continuation of Box No.III of continuation of first sheet(2)</u>

Document 1: JP 2013-110512 A (Canon Inc.), 06 June 2013 (06.06.2013), paragraphs [0010] to [0016], [0050], [0053] to [0054]; fig. 1, 7 (Family: none)

Disclosed in Document 1 is an image pick-up device for masking a privacy region which is predefined by the user in a captured image, the image pick-up device in which when an impact detection unit detects an impact, an image that is not masked is accumulated in an internal accumulation unit, and a masked image is distributed to a network according to a network protocol by an image distribution unit; and an image is encrypted before being accumulated or distributed. Furthermore, it is merely a well-known and common technique to use a recorder to record a monitored image distributed to the network. Thus, claims 1, 3, 5, 7, and 9 do not have a special technical feature.

Next, the following special technical feature could be found in claim 2.

Accordingly, claims are classified into two inventions each of which has a special technical feature indicated below.

Meanwhile, claims 1, 3, 5, 7 and 9 having no special technical feature are classified into Invention 1.

(Invention 1) claims 1-11

A feature that authentication is performed to thereby allow access to video data that has not been masked.

Claims 1, 3, 5, 7 and 9 having no special technical feature are classified into Invention 1.

Claims 2, 4, 6, 8 and 10-11 are classified into Invention 1, since it is efficient to carry out a search on these claims together with claim 1.

(Invention 2) claim 12

A feature that coordinate information is acquired from a registration mask table depending on the turning state of a turning unit, and masking is performed on the basis of the coordinate information.

Further, there is no same or corresponding special technical feature between Invention 1 and Invention 2.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001069494 A